(19) Europäisches Patentamt / European Patent Office / Office européen des brevets

(11) **EP 2 646 775 B1**

(12) **FASCICULE DE BREVET EUROPEEN**

(45) Date de publication et mention
de la délivrance du brevet:
**14.10.2015 Bulletin 2015/42**

(51) Int Cl.:
**G01C 21/00** (2006.01)    **G01C 21/20** (2006.01)

(21) Numéro de dépôt: **11805078.0**

(22) Date de dépôt: **01.12.2011**

(86) Numéro de dépôt international:
**PCT/FR2011/052840**

(87) Numéro de publication internationale:
**WO 2012/072957 (07.06.2012 Gazette 2012/23)**

(54) **PROCEDE ET SYSTEME D'ESTIMATION D'UNE TRAJECTOIRE D'UN ELEMENT OU CORPS MOBILE**

VERFAHREN UND SYSTEM ZUR SCHÄTZUNG DES WEGES EINES MOBILEN ELEMENTS ODER KÖRPERS

METHOD AND SYSTEM FOR ESTIMATING A PATH OF A MOBILE ELEMENT OR BODY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2010   FR 1059965**
**01.12.2010   FR 1059966**

(43) Date de publication de la demande:
**09.10.2013   Bulletin 2013/41**

(73) Titulaires:
• **Commissariat à l'Énergie Atomique et aux Énergies Alternatives 75015 Paris (FR)**
• **Movea 38000 Grenoble (FR)**

(72) Inventeurs:
• **YOUSSEF, Joe F-38000 Grenoble (FR)**
• **GODIN, Christelle F-38190 Brignoud (FR)**
• **LESECQ, Suzanne F-38190 Froges (FR)**

(74) Mandataire: **Bonnet, Michel Cabinet Bonnet 93, rue Réaumur - Boîte 10 75002 Paris (FR)**

(56) Documents cités:
**US-A1- 2005 234 644**

• **DEJNABADI HOOMAN ET AL: "Estimation and Visualization of Sagital Kinematics of Lower Limbs Orientation Using Body-Fixed Sensors", IEEE TRANSACTIONS ON BIOMEDICAL ENGINEERING, IEEE SERVICE CENTER, PISCATAWAY, NJ, USA, vol. 53, no. 7, 1 juillet 2006 (2006-07-01), pages 1385-1393, XP002475932, ISSN: 0018-9294, DOI: 10.1109/TBME.2006.873678 cité dans la demande**
• **KIM A ET AL: "A quaternion-based orientation estimation algorithm using an inertial measurement unit", POSITION LOCATION AND NAVIGATION SYMPOSIUM, 2004. PLANS 2004 MONTEREY, CA, USA 26-29 APRIL 2004, PISCATAWAY, NJ, USA,IEEE, US, 26 avril 2004 (2004-04-26), pages 268-272, XP010768757, DOI: 10.1109/PLANS.2004.1309003 ISBN: 978-0-7803-8416-3**
• **FARID GUL ET AL: "GPS/SINS Navigation Data Fusion Using Quaternion Model and Unscented Kalman Filter", MECHATRONICS AND AUTOMATION, PROCEEDINGS OF THE 2006 IEEE INTERNATIONA L CONFERENCE ON, IEEE, PI, 1 juin 2006 (2006-06-01), pages 1854-1859, XP031027063, ISBN: 978-1-4244-0465-0**
• **BERNARD FRIEDLAND: "Analysis Strapdown Navigation Using Quaternions", IEEE TRANSACTIONS ON AEROSPACE AND ELECTRONIC SYSTEMS, IEEE SERVICE CENTER, PISCATAWAY, NJ, US, vol. AES-10, no. 5, 1 septembre 1978 (1978-09-01), pages 764-768, XP011166474, ISSN: 0018-9251**

**Description**

L'invention porte sur un système d'estimation d'une trajectoire d'un élément ou d'un corps mobile comprenant un ensemble capteur comprenant un accéléromètre et un gyromètre liés de manière solidaire.

La trajectoire d'un élément est un ensemble de positions cartésiennes Position_C successives de l'élément.

L'invention concerne notamment l'estimation de cette trajectoire ou de l'orientation dans le cadre de la navigation piéton. Ce domaine est en pleine expansion, avec au moins une conférence internationale intégralement dédiée au domaine de la navigation et de la localisation à l'intérieur des bâtiments (International Conference on Indoor Positionning and Indoor Navigation - IPIN, articles publiés dans IEEE Xplore).

L'invention se situe dans un contexte à deux modalités de mesure, à savoir accéléromètres et gyromètres (AG).

Sans un système externe permettant de déterminer la direction du Nord ou un magnétomètre pour mesurer le champ magnétique terrestre, il n'est pas possible de garantir que le repère de référence soit le repère Nord pour "North Frame" en langue anglaise, qui est un repère fixe dans le référentiel terrestre. Ce repère est utilisé durant tout le mouvement (marche ou course). Il est considéré comme le repère de référence : les orientations (position angulaire) et positions (position cartésienne) sont mesurées par rapport à ce repère.

Le repère Nord est défini par son origine $O_{NF}$ et ses axes ($x_{NF}$, $Y_{NF}$, $Z_{NF}$) qui se confondent avec les axes du repère terrestre, de directions l'Est, le Nord et la verticale ascendante. Son origine $O_{NF}$ peut correspondre à l'endroit où le mouvement débute ou à tout autre endroit.

Par conséquent, dans cette partie, nous nous référons au repère de navigation NF, qui est lié au repère Nord par une rotation constante autour de l'axe vertical. Dans la suite de la description, le repère de navigation NF est utilisé comme repère de référence, et les mesures données dans ce repère de navigation NF ont un exposant n.

La trajectoire parcourue par l'ensemble capteur EC peut être récupérée par une double intégration de l'accélération propre $\mathbf{a}_p^n$ en trois dimensions ou 3D dans le repère de navigation NF.

Soit le repère BF un repère lié au capteur. Dans la suite, les vecteurs exprimés dans ce repère ont un exposant b. Les mesures de l'accéléromètre..sont données dans le repère BF et la gravité (ou pesanteur) est superposée à l'accélération propre $\mathbf{a}_p^g$.

Avant de réaliser la double intégration il est donc nécessaire d'exprimer les mesures dans le repère NF et de compenser la gravité.

Pour réaliser le passage du repère NF au repère BF, une formule de passage est nécessaire. Cette formule peut être obtenue si on connaît l'orientation du capteur. Dans le contexte AG, l'orientation est obtenue en intégrant la mesure du gyromètre. Cependant, cette intégration génère une dérive que nous proposons de limiter dans la présente invention.

Dans la littérature, la dérive d'orientation est généralement exprimée comme une erreur d'orientation du repère local BF par rapport au repère NF. On peut alors considérer qu'une erreur ou dérive de l'orientation estimée tourne les données du repère local BF, non pas vers le repère de navigation NF, mais vers un autre repère de navigation NF' affecté par la dérive et défini dans la suite de la description.

Le repère NF', affecté par la dérive est défini par son orientation par rapport au repère de navigation ou repère global fixe lié au repère terrestre NF. Cette orientation de NF' par rapport à NF, est liée à la dérive de l'orientation estimée en intégrant le gyromètre. Ainsi, l'orientation du repère NF' par rapport au repère NF dérive lentement au fil du temps. Les mesures données dans ce repère NF' ont un exposant n'.

Si on représente l'orientation du repère NF dans le repère NF' par un quaternion $q_{n'n}$, l'orientation du repère NF dans le repère BF par un quaternion $q_{bn}$, l'orientation du repère NF' dans le repère BF par un quaternion $q_{bn'}$, on peut alors écrire par l'équation suivante :

$$q_{bn}(t) = q_{bn'}(t) \otimes q_{n'n}(t) \,,$$

le signe $\otimes$ étant le signe du produit associé aux quaternions.

Dans une approche classique, il est possible d'estimer la trajectoire d'une cheville d'un utilisateur à partir des données inertielles mesurées par l'accéléromètre et le gyromètre.

Dans ce cas, (au niveau de la cheville), le cycle de marche peut être séparé en deux phases: la phase de vol pendant laquelle le pied se déplace (appelée SW pour "SWing phase" en langue anglaise), et celle pendant laquelle le pied est au sol ou phase d'appui (appelée ST pour "STance phase" en langue anglaise). Un pas est composé de la succession des deux phases ST et SW et la marche est caractérisée par une succession de pas.

On nomme $[t_1^\kappa, t_2^\kappa]$ l'intervalle de temps de la phase SW pour le kième pas détecté. Afin de limiter la dérive de position cartésienne qui est introduite par la double intégration de l'accélération, cette dernière est intégrée uniquement durant la phase SW de déplacement du pied, tandis que la vitesse est mise à zéro pendant la phase ST. Cet ajustement nécessite la détection précise des deux phases afin de déterminer si le pied d'un utilisateur est ou non en mouvement.

La vitesse de la cheville d'un piéton peut être calculée pas par pas (après exécution d'une étape de détection), tandis que l'orientation ou position angulaire Position_A est déterminée à chaque indice de temps *l* avec le quaternion $q_{bn}^{(l)}$ (qui définit l'orientation du repère global NF dans le repère local BF) calculé à partir des mesures de vitesses angulaires $\boldsymbol{\omega}^{b(l)} = [\omega_x^{b(l)} \quad \omega_y^{b(l)} \quad \omega_z^{b(l)}]^T$ et le quaternion d'orientation précédent $q_{bn}^{(l-1)}$ comme dans l'équation

$$q_{bn}^{(l)} = q_{-\omega}^{b(l-1)} \otimes q_{bn}^{(l-1)}$$

Une fois que l'orientation dans le repère local BF est déterminée, les mesures de l'accéléromètre sont simplement tournées par rotation dans le repère global NF, par la relation $\mathbf{a}^{n(l)} = \mathbf{R}_{nb}^{(l)} \mathbf{a}^{b(l)}$ dans laquelle $\mathbf{R}_{nb}^{(l)}$ est la matrice de rotation associée au quaternion $q_{nb}^{(l)}$ telle que définie par :

$$\mathbf{R}_{bn} = \begin{bmatrix} 2q_{bn,0}^2 - 1 + 2q_{bn,1}^2 & 2q_{bn,1}q_{bn,2} - 2q_{bn,0}q_{bn,3} & 2q_{bn,1}q_{bn,3} + 2q_{bn,0}q_{bn,2} \\ 2q_{bn,1}q_{bn,2} + 2q_{bn,0}q_{bn,3} & 2q_{bn,0}^2 - 1 + 2q_{bn,2}^2 & 2q_{bn,2}q_{bn,3} - 2q_{bn,0}q_{bn,1} \\ 2q_{bn,1}q_{bn,3} - 2q_{bn,0}q_{bn,2} & 2q_{bn,2}q_{bn,3} + 2q_{bn,0}q_{bn,1} & 2q_{bn,0}^2 - 1 + 2q_{bn,3}^2 \end{bmatrix}$$

Le quaternion $q_{nb}$ étant le conjugué de $q_{bn}$ et la matrice $R_{bn}$ étant la matrice de transformation inverse de $R_{hb}$.

Quand la mesure de l'accéléromètre dans le repère NF $\mathbf{a}^n$ a été calculée, la gravité doit être compensée pour calculer l'accélération propre : $\mathbf{a}_p^n = \mathbf{a}^n + \mathbf{g}^n$.

En fait, le quaternion de positition angulaire $q_{bn}^{(l)}$ dérive par rapport à sa "vraie" valeur en raison de la dérive et du bruit des mesures du gyromètre G. En outre, le quaternion de position angulaire $q_{bn}^{(l)}$, obtenu par la relation $q_{bn}^{(l)} = \mathbf{f}_q(q_{bn}^{(l-1)}, \boldsymbol{\omega}^{b(l-1)}) = q_{-\omega}^{b(l-1)} \otimes q_{bn}^{(l-1)}$, nécessite la connaissance des conditions initiales. Ainsi, l'accélération propre est corrompue à cause de la dérive due à l'intégration du gyromètre pour obtenir l'orientation.

Les mesures de l'accéléromètre, et ainsi même l'accélération propre $\mathbf{a}_p^n$ sont altérées par le bruit et parfois par un décalage ou "offset" en langue anglaise.

Même si l'accélération propre est calculée avec un quaternion de position angulaire $q_{bn}^{(l)}$ "parfait", la double intégration de ce décalage et de ce bruit conduit à des erreurs sur la position estimée, ainsi que sur la vitesse.

En outre, en raison de la dérive du quaternion $q_{bn}^{(l)}$, le champ de gravité qui est compensé n'est pas égal à $\mathbf{g}^n = [0\ 0\ -1]^T$ car on n'est pas dans le repère global NF, mais dans le repère NF'.

Le thème de la navigation et de la localisation dans des bâtiments, i.e. en intérieur ou "indoor" en langue anglaise, est un problème classique rencontré dans la littérature. En 2010, une conférence intégralement dédiée à la navigation et au positionnement indoor a été créée (IPIN pour "International Conference on Indoor Positioning and Indoor Navigation", IEEE). Parmi les articles présentés, neuf sont consacrés à la navigation piéton avec un système de capture de mouvement fixé au pied ou "foot mounted pedestrian navigation" en langue anglaise. Ci-suit un résumé de ces communications ainsi que d'autres communications.

Un premier article, "A High Precision Reference Data Set for Pedestrian Navigation using Foot-Mounted Inertial Sensors", de Michael Angermann, Patrick Robertson, Thomas Kemptner, et Mohammed Khider, IPIN conference, Zurich, 2010, présente une méthodologie d'aquisition de données basée sur un système optique de référence et une unité de mesures inertielles fixée au pied, le problème de l'estimation de la trajectoire n'étant pas abordé.

Un deuxième article, "Evaluation of Zero-Velocity Detectors for Foot-Mounted Inertial avigation Systems", de Isaac Skog, John-Olof Nilsson, et Peter Händel, IPIN conference, Zurich, 2010, s'intéresse au problème de la détection des phases de mouvement à vitesse nulle pour un pied équipé d'une centrale inertielle ("zero velocity detectors for a footmounted inertial sensor based pedestrian navigation system"). Quatre techniques de détection de vitesse nulle sont comparées sur le critère d'erreur de position. Le problème de dérive de position induit par les décalages et dérives des mesures n'est pas abordé.

Un troisième article, " Comparison and Evaluation of Accélération Based Step Length Estimators for Handheld Devices ", de Jasper Jahn, Jochen Seitz, Lucila Patino-Studencka, Ulrich Batzer, et Javier Gutiérrez Boronat, IPIN conference, Zurich, 2010, compare plusieurs techniques d'estimation de la longueur du pas d'un piéton à partir de mesures accélérométriques, sans aborder les problèmes de dérive et de recalage.

Un quatrième article, "An improved shoe-mounted inertial navigation system", de Nadir Castaneda et Sylvie Lamy-Perbal, IPIN conference, Zurich, 2010, propose un système amélioré de suivi de piéton utilisant un capteur inertiel monté au niveau de la chaussure d'un utilisateur. Le système met en oeuvre une procédure de détection de la phase d'appui ou "STance phase" à base de logique floue. Un filtre de Kalman indirect IKF est implanté (l'état n'est pas directement estimé, mais une erreur sur l'état, comme dans un cinquième article, "Pedestrian Inertial Navigation with Gait Phase Detection Assisted Zero Velocity Updating Young Soo Suh, Sangkyung Park", 4th International Conference on Autonomous Robots and Agents, Feb 10-12, 2009, Wellington, New Zealand, où le filtre de Kalman indirect IKF est implanté dans le cadre de la navigation piéton, cet article mettant en oeuvre des capteurs inertiels/magnétiques et des capteurs de force positionnés respectivement sur la pointe de la chaussure et sous la chaussure). La constitution du système inertiel n'est pas explicitement décrit, et un filtre de Kalman est implanté.

Un sixième article, "Context-Adaptive Algorithms to Improve Indoor Positioning with Inertial Sensors", de Ulrich Walder, Thomas Bernoulli, Gerald Glanzer, et Thomas Wießflecker, IPIN conference, Zurich, 2010, constate que la précision de positionnement pour les systèmes inertiels (montés sur le corps) pour la navigation piéton à l'intérieur de bâtiments est faible si on implante juste une double intégration des accélérations. Deux améliorations sont proposées respectivement sur la détection des phases à vitesse nulle et l'utilisation d'une carte pour recaler la trajectoire ou diminuer la dérive.

Un septième article, "Dual IMU Indoor Navigation with Particle Filter based Map-Matching on a Smartphone", de C. Ascher, C. Kessler, M. Wankerl, G.F. Trommer, IPIN conference, Zurich, 2010, traite, de la navigation à l'intérieur de bâtiments avec recalage sur une carte embarquée dans un téléphone intelligent ou "smartphone" en langue anglaise. Deux unités de mesures inertielles à bas-coût, un compas électronique et un altimètre sont utilisés. Un filtre à particule est implanté pour fusionner les informations. La détection des phases à vitesse nulle est implantée. Un algorithme de localisation et de construction de carte conjointement (SLAM algorithm - Simultaneous Localisation And Mapping) est exploité, même si localement, les capteurs qui permettent de construire la carte peuvent être indisponibles.

Dans un huitième article, "Design choices, filter parameter tuning, and calibration of zero-velocity update aided inertial navigation systems for pedestrian navigation", de John-Olof Nilsson, Isaac Skog, et Peter Händel, IPIN conference, Zurich, 2010, est traité le problème de la conception d'un système de navigation inertiel avec détection des phases à vitesse nulle (ZUPT pour "Zero velocity update"). Le système met en oeuvre un filtre de Kalman étendu (EKF) et la détection ZUPT. Les auteurs s'intéressent aux choix de conception (placement de capteurs, spécifications) et aux paramètres à ajuster pour le filtre de Kalman. Les résultats sur l'erreur moyenne de position montrent de bons résultats par rapport à ceux rencontrés usuellement dans la littérature.

Un neuvième article, "Pedestrian Indoor Navigation by aiding a Foot-mounted IMU with RFID Signal Strength Measurements", de Antonio R. Jiménez, Fernando Seco, J. Carlos Prieto et Jorge Guevara, IPIN conference, Zurich, 2010, met en oeuvre une unité de mesures inertielles attaché au pied d'un piéton et des étiquettes RFID. La détection des phases à vitesse nulle est exploitée et un filtre de Kalman inverse est implanté pour compenser les erreurs de position, vitesse et attitude ou position angulaire. La technique implantée est valide pour différents types de mouvement (latéral, arrière, marche, course) et ne nécessite pas de phase de calibration hors la ligne de la démarche, ni de l'atténuation des signaux radio dans l'environnement. La dérive de cap est réduite grâce à l'utilisation de magnétomètres.

Un dixième article, "On the use of foot-mounted INS, - UWB-ranging and opportunistic coopération in high-accuracy indoor positioning systems", de Peter Strömbäck, Jouni Rantakokko, et Erika Emilsson, IPIN conference, Zurich, 2010, couple une centrale inertielle et de la radio ultra-large bande (IR-UWB) de manière à diminuer les erreurs de position. Le système utilisé pour la localisation est donc plus riche et plus complexe qu'un simple dispositif comprenant un accéléromètre et un gyromètre.

Un onzième article, "A GPS/INS-based architecture for rescue team monitoring" d'Alberto Croci, Mattia De Agostino, et Ambrogio Manzino, IPIN conference, Zurich, 2010 porte sur une implantation d'un système mixte navigation par satellites/centrale inertielle : le système inertiel est utilisé pour compter les pas et mesurer la durée temporelle d'un pas, le magnétomètre et le gyromètre étant utilisés pour estimer la direction du déplacement. Les données GPS sont utilisées pour corriger le biais (de position) lorsqu'elles sont suffisamment fiables.

D'autres articles, tel un douzième article, "Towards Real-Time Camera Egomotion Estimation and Three-Dimensional Scene Acquisition from Monocular Image Streams", de Aufderheide et Werner Krybus, IPIN conference, Zurich, 2010, utilisent des systèmes de vision pour compenser la dérive introduite par la double intégration de l'accélération propre, ou bien des systèmes avec un champ magnétique externe alternatif comme décrit dans un treizième article, "Position Estimation Using Artificial Generated Magnetic Fields", de Jörg Blankenbach et Abdelmoumen Norrdine, IPIN conference, Zurich, 2010.

Pour résumer ces treize articles précédents, soit ils mettent en oeuvre un système complémentaire à la centrale inertielle (y compris carte, GPS, UWB) pour compenser la dérive en position, soit ils implantent un filtre de Kalman (IKF, EKF), soit ils exploitent explicitement des mesures fournies par des magnétomètres.

Le document FR 2 918 745 propose un dispositif d'assistance à la navigation d'une personne comprenant au moins un calculateur comprenant en mémoire une carte numérisée du lieu dans lequel le trajet de la personne est prévu, une interface homme-machine, un ensemble de capteurs portés par la personne et délivrant les informations sur les mouvements de la personne. L'ensemble de capteurs comprend par exemple une centrale inertielle. Les capteurs portés par l'utilisateur sont par exemple des accéléromètres, magnétomètres, gyromètres, et baromètres. Un calcul du chemin à parcourir est par exemple mis à jour en fonction d'objectifs intermédiaires identifiés du trajet atteint, ces objectifs étant repérés sur la carte numérisée. Dans ce cas, il y a un recalage de la dérive aux objectifs intermédiaires. Le dispositif de la présente invention ne nécessite pas de carte du lieu. Il ne nécessite pas non plus de "recalage manuel" par rapport à des points de passage intermédiaires identifités.

Le document US20070018890 propose un dispositif de navigation interne et externe. La version portable (navigation piéton) fusionne les informations fournies par plusieurs capteurs, GPS, podomètres et/ou réalisées à partir d'accéléromètres à deux axes de mesure, et compas numérique. Des capteurs sont placés sur le dos d'un chien accompagnateur. La localisation interne s'opère en exploitant les connexions sans fil déjà disponibles dans de nombreux environnements du fait de l'existence des réseaux WiFi. La fusion est réalisée dans le cadre de la théorie de Dempster-Shafer. Le système ne met pas en oeuvre de gyromètres.

Le document EP1488197 combine un dispositif GPS et une unité de navigation à l'estime ou "Dead Reckoning Unit" en langue anglaise, le système de navigation étant destiné à des personnes mal voyantes. Dans le mode de réalisation proposé, le système contient également une caméra numérique pour la capture d'images. Une carte numérisée de l'environnement est également exploitée. L'unité de navigation à l'estime ou DRU pour Dead Reckoning Unit contient un accéléromètre, un gyromètre et un micro-contrôleur ; elle prend le relais lors de pertes du signal GPS ou pour améliorer la précision de la localisation obtenue par le GPS. Le DRU permet d'estimer la distance parcourue et le changement de direction, en couplant ces informations à une carte numérisée même en cas de perte du signal GPS. Il est possible de localiser l'utilisateur. La distance est estimée à partir du nombre de pas réalisés et de la longueur moyenne d'un pas. La direction relative de l'utilisateur est estimée à l'aide d'un gyroscope, car il est insensible aux perturbations magnétiques et est précis. Les auteurs signalent que d'autres capteurs permettant d'estimer la distance parcourue et le changement relatif de direction peuvent être exploités et que leur dispositif ne se limite pas à l'utilisation d'un accéléromètre et d'un magnétomètre. La sortie du gyroscope est intégrée pour donner l'angle qui est codé, pour l'exemple présenté sur quatre bits, ce qui donne 16 valeurs possibles de l'angle, et une résolution de 22.5°. Le problème de la dérive introduite par l'intégration du gyromètre n'est pas abordé, probablement dû à l'utilisation d'un dispositif intégrant un gyroscope de grande précision.

Le brevet US6323807 présente un système de navigation en intérieur ou indoor avec des capteurs "passifs". Un premier modèle statistique est construit à partir des mesures faites en des endroits connus. Un second modèle statistique est obtenu à partir de mesures en des points inconnus. Le calculateur détermine la probabilité pour qu'une position cartésienne inconnue corresponde en fait à une position connue. Les capteurs incluent un accéléromètre triaxial, un magnétomètre triaxial, un détecteur de luminosité, et un capteur de température. Il est aussi possible d'ajouter une caméra à basse résolution, un capteur d'hygrométrie, un gyroscope pour mesurer l'inclinaison, un détecteur de gaz, et un altimètre. Le système nécessite une phase d'apprentissage, avec extraction de caractéristiques. Il s'apparente ensuite à un système de classification.

Un quatorzième article "Gait Assessment in Parkinson's Disease: Toward an Ambulatory System for Long-Term Monitoring Arash Salarian", de Heike Russmann, François J.G. Vingerhoets, Catherine Dehollain, Yves Blanc, Pierre R. Burkhard, et Kamiar Aminian, IEEE Transactions, Biomedical Engineering, Vol. 51(8), pp. 1434-1443, 2004, divulgue notamment un système de mesure de la vitesse de rotation de certains segments du corps humain au moyen de gyroscopes, pour des patients parkinsoniens. Le problème de la dérive des mesures gyrométriques est traité par l'intermédiaire d'un filtrage passe-haut préliminaire à tout autre traitement. La présente invention ne nécessite pas une telle phase de prétraitement par filtrage passe-haut. En outre, la présente invention utilise des accéléromètres, ce qui n'est pas décrit dans l'article.

Un quinzième article, Estimation and Visualization of Sagittal Kinematics of Lower Limbs Orientation Using Body-Fixed Sensors Hooman Dejnabadi, Brigitte M. Jolies, Emilio Casanova, Pascal Fua, Kamiar Aminian, IEEE Transactions On Biomedical Engineering, Vol. 53(7), pp. 1385-1393, JULY 2006, divulgue un gyroscope et un accéléromètre à deux axes de mesure qui sont utilisés pour estimer l'orientation d'une jambe (le capteur est fixé sur le tibia). La fusion des données issues de ces capteurs exploite un modèle de la marche et des contraintes biomécaniques. Le mode de traitement des données est totalement différent de celui de la présente invention. En effet, l'approche proposée nécessite de positionner précisément le capteur sur le tibia, de l'utilisateur, ce qui n'est pas le cas de la présente invention. Les auteurs prennent en compte le biais existant dans les mesures gyrométriques. L'angle du tibia par rapport à l'horizontale lorsque le pied est fixe est obtenu directement à partir des mesures fournies par l'accéléromètre bi-axial. A partir des mesures disponibles au niveau du tibia, sont calculées les mesures correspondantes qui devraient être mesurées au niveau de la cheville. L'estimation du biais sur l'angle introduit dans le calcul de l'angle par l'intégration de la mesure fournie par le gyroscope met en oeuvre un filtrage passe-bas par un filtre de Butterworth du second ordre qui est appliqué à l'angle obtenu par intégration aux instants auxquels on ne connaît pas précisément cet angle. Ensuite, on applique une spline cubique d'interpolation ou "piecewise cubic hermite interpolation" aux instants connus afin de retrouver une estimation de la dérive de l'angle sans dépassement ni oscillation, tout en préservant ses propriétés de monotonicité. La dérive d'angle estimée est ensuite soustraite à l'angle obtenu par intégration pour obtenir une estimation de l'angle sans dérive.

Un seizième article, "A practical gait analysis system using gyroscopes", de Kaiyu Tong et Malcolm H. Granat, Medical Engineering & Physics, Vol 21, p 87-94, 1999, traite de l'analyse de la marche en utilisant des gyromètres. Un gyromètre mono-axe est placé sur le tibia d'un utilisateur, à proximité de la cheville. L'inclinaison du tibia est obtenue par intégration des mesures fournies par le gyroscope. Le biais initial du gyromètre, est obtenu en calculant la valeur moyenne du signal délivré par le gyromètre lorsque l'utilisateur est au repos, sur une fenêtre temporelle de cinq secondes. Des hypothèses sur une orientation particulière des segments de la jambe à un moment particulier du pas à savoir le milieu de la phase d'appui ou "mid-stance" en langue anglaise, permettent de remettre à zéro l'angle, ce qui permet d'annuler la dérive d'angle à la fin du pas. Une autre méthode testée consiste à appliquer un filtrage passe-haut sur les signaux d'inclinaison du tibia pour limiter la dérive et enlever le décalage. Cet article est axé sur une estimation d'angles et non sur une estimation de la trajectoire. Ainsi la correction de la dérive d'angle ne tient pas compte de la dérive sur la trajectoire.

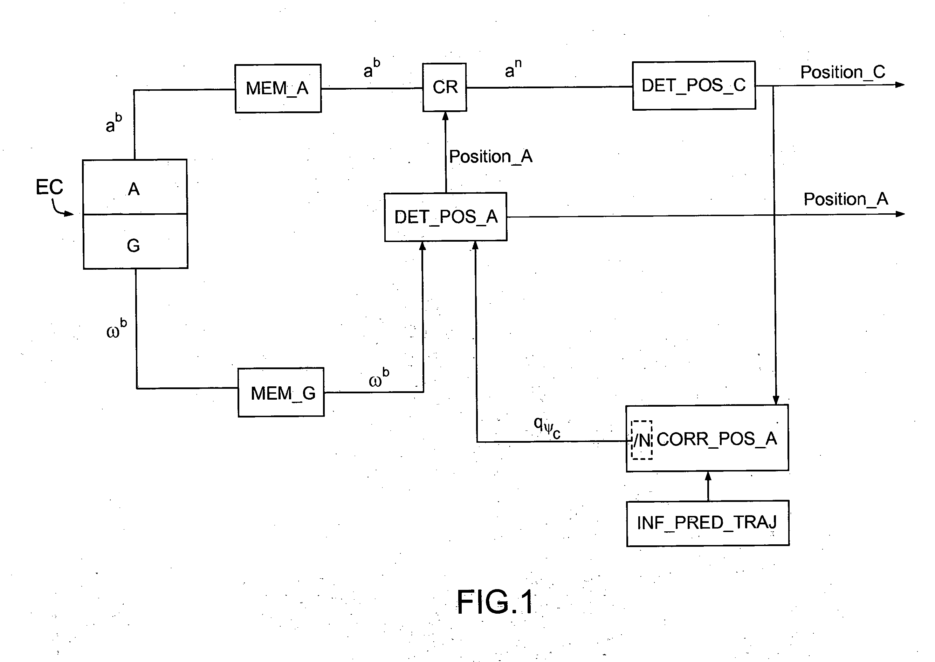

Un dix-septième article, "Three dimensional inertial sensing of foot movements for automatic tuning of a two-channel implantable drop-foot stimulator " de P.H. Veltink, P. Slycke, J. Hemssems, R. Buschman, G. Bultstra, et H. Hermens, Medical Engineering & Physics, Vol. 25, p 21-28, 2003, s'intéresse aux mouvements en trois dimensions du pied en vue d'implanter un stimulateur. La position cartésienne et l'orientation ou position angulaire du pied sont estimées à partir de mesures accélérométriques et magnétométriques triaxiales. Les mesures fournies par les gyromètres sont intégrées pour déterminer l'orientation, et la position est obtenue par la double intégration des accélérations ramenées dans le repère inertiel. Il est divulgué que ces phases d'intégration peuvent conduire à un résultat erroné pour l'estimation de l'orientation et de la position à cause de décalages mal connus et de gains mal estimés. Il est également décrit que pour la marche d'un être humain, des conditions initiales et finales particulières peuvent être prises en compte, par exemple, un pied posé à plat sur le sol, une position verticale identique au début et à la fin d'un pas. En outre la durée d'intégration est limitée, sur la durée de un pas. La démarche proposée pour estimer la position et l'orientation du pied en trois dimensions est la suivante: l'orientation du capteur sur le pied est déterminée initialement, lors d'une phase statique durant laquelle la personne ne bouge pas. Cela permet de mesurer le champ de gravité dans le repère du capteur. Un algorithme de détection de pas permet de définir le début et la fin d'un pas. A la fin de chaque pas, la mesure de vitesse angulaire est intégrée et la dérive est compensée en utilisant les conditions sur l'angle au début et la fin du pas. L'orientation obtenue, en fonction du temps, est ensuite utilisée pour exprimer l'accélération dans le repère inertiel. Le champ de gravité est ensuite soustrait, ce qui fournit l'accélération propre. Cette dernière est intégrée deux fois pour déterminer la position, et les conditions sur le début et la fin du pas sont exploitées pour éliminer la dérive de position. Cette démarche de correction de la dérive, illustrée par la figure 1 du dix-septième article, est totalement différente de celle de la présente invention.

Un dix-huitième article "Self-contained Position Tracking of Human Movement Using Small Inertial/Magnetic Sensor Modules" de Yun Xiaoping, E.R. Bachmann, H. Moore, et J. Calusdian, IEEE International Conference on Robotics and Automation, 2007, présente un système de navigation personnel ne nécessitant pas d'infrastructure particulière. La poursuite de la posture est obtenue par l'intermédiaire d'un ensemble de capteurs inertiels/magnétiques fixés sur les membres de la personne en déplacement. Les modules de capteurs considérés contiennent trois gyromètres, trois accéléromètres, et trois magnétomètres (ces capteurs sont triaxiaux et chacun des triaxes est monté à angle droit). Les auteurs notent la dérive introduite par les accéléromètres : ils exploitent alors les propriétés de la marche (i.e. phases à vitesse nulle) afin de corriger les mesures délivrées par les accéléromètres. Le passage du repère mobile au repère fixe est réalisé en utilisant l'attitude (donnée sous la forme d'un quaternion) fournie directement par le module de capteurs, ce dernier intégrant un filtre de Kalman. La description ne donne pas d'information précise sur les capteurs utilisés pour calculer cette orentation.

Un dix-neuvième article, "Spatio-temporal parameters of gait measured by an ambulatory system using miniature gyroscopes", par K. Aminian, B. Najafia, C. Bülab, P. -F. Leyvrazc et Ph. Robert, dans Journal of Biomechanics, Vol. 35(5), pp. 689-699, 2002, décrit un système d'acquisition de données pour l'estimation des paramètres spatio-temporels de la marche. Pour cela, les auteurs exploitent la mesure des vitesses angulaires au niveau des membres inférieurs. Le dispositif de mesure exploite des gyromètres et des capteurs de force pour la validation. L'estimation des paramètres est faite par l'intermédiaire de la transformée en ondelettes. On est donc ici très loin d'un système de navigation tel que celui proposé dans la présente invention. En outre, les auteurs n'abordent pas la dérive des gyromètres puisqu'ils traitent de données prétraitées par la transformée en ondelette.

Ces différents systèmes ont une précision limitée et un coût élevé. Ils ne proposent pas de résoudre le problème de la dérive de l'orientation de manière globale en tenant compte d'informations sur la trajectoire. Ils nécessitent souvent un nombre de capteurs supérieur à celui de la présente invention.

Il est proposé, selon un aspect de l'invention, un système d'estimation de trajectoire d'un élément ou d'un corps mobile, comprenant un ensemble capteur comprenant un accéléromètre et un gyromètre liés de manière solidaire. Le système comprend des moyens de correction rétroactive d'une position angulaire obtenue à partir des mesures du gyromètre à au moins un instant parmi une pluralité d'instants successifs d'un intervalle de temps à partir de positions cartésiennes de l'accéléromètre à au moins deux desdits instants successifs et d'informations prédéterminées représentatives de la trajectoire de l'accéléromètre durant ledit intervalle de temps, et à partir d'une rotation adaptée pour minimiser un écart entre lesdites informations prédéterminées et leur équivalent sur la trajectoire obtenue après rotation.

Les informations prédéterminées peuvent être relatives à l'orientation de la trajectoire. Cette orientation peut être calculée à partir de la trajectoire estimée. Par exemple, si l'information prédéterminée est l'orientation de la direction du pas par rapport au Nord (ou cap de la marche), alors son équivalent sur la trajectoire est calculé par exemple en prenant l'angle entre la direction Nord-Sud et la projection sur le plan horizontal du vecteur reliant le premier et le dernier point de la trajectoire du pas.

Un tel système permet de compenser la dérive en agissant sur les angles estimés en intégrant les mesures du gyromètre à partir de la trajectoire obtenue. Cela permet de gérer le problème de la dérive de manière globale.

En outre, l'objet de la présente invention est d'obtenir une correction de trajectoire sans utiliser des données de mesure issues du magnétomètre. La correction est basée uniquement sur les mesures issues de l'accéléromètre et du gyromètre.

Dans la présente invention, l'attitude du repère mobile est obtenu via l'intégration numérique des mesures gyrométriques, et la dérive est compensée non sur les mesures accélérométriques, mais sur l'attitude estimée, en tenant compte d'hypothèses sur la trajectoire, telle que par exemple, le déplacement du piéton dans un plan horizontal.

L'intervalle de temps peut correspondre à une phase de vol d'un pied.

Dans un mode de réalisation, le système comprend, en outre :

- des moyens de mémorisation de premières mesures délivrées par l'accéléromètre et de deuxièmes mesures délivrées par le gyromètre à ladite pluralité d'instants successifs dudit intervalle de temps, dans un repère mobile lié à l'ensemble capteur ;
- des premiers moyens de détermination de ladite position angulaire du gyromètre définie par des angles de rotation par rapport à des positions de référence selon les axes d'un repère global fixe lié au repère terrestre, audits instants successifs, à partir desdites deuxièmes mesures ; et
- des deuxièmes moyens de détermination de ladite position cartésienne de l'accéléromètre, dans ledit repère global fixe, auxdits instants successifs, à partir desdites premières mesures et de ladite position angulaire fournie par lesdits premiers moyens de détermination.

Ainsi, la trajectoire peut être obtenue et la dérive en position peut être corrigée.

Plus particulièrement, le système de l'invention est apte à estimer une trajectoire d'un élément ou d'un corps mobile, en utilisant :

- l'accéléromètre apte à délivrer des mesurés de données, le gyromètre apte à délivrer des mesures de vitesses angulaires,
- des premiers moyens d'estimation de la position angulaire à partir de la vitesse angulaire mesurée par le gyromètre, à au moins deux instants parmi une pluralité d'instants successifs d'un intervalle de temps,
- des deuxièmes moyens d'estimation de la trajectoire de l'élément ou du corps mobile comprenant, à au moins deux desdits instants successifs, une position cartésienne de l'accéléromètre, à partir des mesurés de cet accéléromètre, et à partir de la position angulaire précédemment estimée, et
- des troisièmes moyens d'estimation d'une rotation adaptée pour minimiser un écart entre des informations prédéterminées représentatives de la trajectoire à estimer et leur équivalent sur la trajectoire tournée, obtenue après rotation de la trajectoire précédemment estimée,
- des moyens de correction rétroactive de la position angulaire auxdits au moins deux instants estimée par les premiers moyens d'estimation, à partir des résultats de la rotation estimée par les troisièmes moyens d'estimation,
- des quatrièmes moyens d'estimation de la trajectoire corrigée de l'élément ou du corps mobile comprenant une position cartésienne corrigée de l'accéléromètre à au moins deux desdits instants successifs, à partir des mesures de cet accéléromètre, et à partir de la position angulaire corrigée.

Selon un mode de réalisation, lesdits moyens de correction sont adaptés pour corriger itérativement ladite position angulaire.

Ainsi, la précision est améliorée.

Dans un mode de réalisation, lesdites informations prédéterminées représentatives de la trajectoire de l'accéléromètre comprennent une trajectoire sensiblement planaire de l'accéléromètre entre un premier instant et un deuxième instant différents, parmi lesdits instants successifs dudit intervalle de temps.

Ainsi, est prise en compte, une caractéristique communément rencontrée dans les mouvements, notamment humains ou animaux ou robots, et ainsi la précision est améliorée.

Par exemple le mouvement d'une cheville durant la marche est sensiblement planaire.

Dans un mode de réalisation, l'orientation du plan de la trajectoire est connue par rapport à la verticale ou au nord.

Ainsi, la précision est améliorée.

Selon un mode de réalisation, la trajectoire entre lesdits premier et deuxième instants comprend un cap connu et/ou une pente connue.

Ainsi, il est possible de prendre en compte des informations mémorisées concernant la pente du lieu où se trouve l'utilisateur ou le cap du déplacement (lors d'un déplacement dans un couloir par exemple), pour lesquels la position angulaire revient régulièrement à la même valeur.

Dans un mode de réalisation, lesdits premier et deuxième instants sont les bornes dudit intervalle de temps.

Ainsi, dans le cas de mouvements cycliques, l'intervalle de temps correspond à un cycle ou à une partie du cycle (par exemple, dans le cas de la marche, l'intervalle de temps correspond à la phase séparant deux instants successifs de vitesse nulle d'un pied).

Par ailleurs, si l'intervalle de temps correspond à une phase de mouvement encadrée par deux phases d'immobilité (ou "MidStance" en langue anglaise dans le cas de la marche) comme dans le cas de la marche, l'hypothèse de mouvement planaire concerne tout le mouvement durant un pas.

Selon un mode de réalisation, lesdites informations prédéterminées représentatives de la trajectoire de l'accéléromètre comprennent des positions cartésiennes possibles mémorisées.

Ainsi, le calcul de la rotation de la trajectoire prend en compte ces points possibles de passage.

Dans un mode de réalisation, lesdits moyens de correction rétroactive sont adaptés pour répartir de manière prédéterminée la correction sur tout ou partie de ladite pluralité d'instants successifs. Par exemple, la correction est linéaire, voire équirépartie.

Ainsi, la correction n'est pas la même à chaque instant et on peut tenir compte de l'évolution temporelle possible de la dérive.

Par exemple, lesdits moyens de correction sont adaptés pour faire croître linéairement la correction sur tout ou partie de ladite pluralité d'instants successifs.

Une répartition linéaire de la correction permet de ne pas avoir d'a priori sur les instants auxquels la correction doit être apportée, mais de tenir compte du fait que cette correction augmente au cours du temps ce qui est le cas lorsque le gyromètre possède un biais.

Dans un mode de réalisation, le système est adapté pour être fixé à un utilisateur, à un terminal mobile, ou à un véhicule terrestre, aérien ou maritime.

Un utilisateur peut être vivant (humain ou animal), ou artificiel.

Ainsi, la trajectoire du lieu où est fixé le système peut être estimée.

Selon un mode de réalisation, le système comprend des moyens de fixation à proximité d'une cheville d'un utilisateur.

Il est également proposé, selon un autre aspect de l'invention, un procédé d'estimation de trajectoire d'un élément ou d'un corps mobile, dans lequel on corrige de manière rétroactive, une position angulaire, à partir des résultats des étapes successives suivantes consistant à :

- estimer une position angulaire obtenue à partir des mesures d'un gyromètre, à au moins un instant parmi une pluralité d'instants successifs d'un intervalle de temps,
- estimer une position cartésienne d'un accéléromètre lié de manière solidaire au gyromètre à au moins un desdits instants successifs à partir des mesures de l'accéléromètre, et d'informations prédéterminées représentatives de la trajectoire de l'accéléromètre durant ledit intervalle de temps, et
- estimer une rotation adaptée pour minimiser un écart entre lesdites informations prédéterminées et leur équivalent sur la trajectoire obtenue après rotation.

A cet effet, l'invention a pour objet un procédé d'estimation d'une trajectoire d'un élément ou corps mobile à l'aide d'un ensemble capteur, cet ensemble capteur étant fixé à l'élément ou corps mobile et comportant un accéléromètre et un gyromètre liés de manière solidaire, comportant les étapes suivantes :

- réception de valeurs d'accélération fournies par l'accéléromètre et mesurées à au moins deux instants parmi une pluralité d'instants successifs d'un intervalle de temps,
- réception de valeurs de vitesse angulaire fournies par le gyromètre et mesurées à au moins deux instants parmi ladite pluralité d'instants successifs de cet intervalle de temps,
- traitement des valeurs fournies pour l'estimation, d'une part, d'au moins une valeur de position angulaire à l'aide des valeurs de vitesse angulaire et, d'autre part, d'au moins deux valeurs de position cartésienne définissant une trajectoire de l'élément ou corps mobile à l'aide des valeurs d'accélération et de ladite au moins une valeur de position angulaire précédemment estimée,

comportant en outre les étapes suivantes :

- estimation de paramètres de rotation, par inversion d'un modèle de recalage rotatoire de la trajectoire estimée sous la contrainte d'une connaissance a priori de la trajectoire, cette connaissance a priori étant constituée de paramètres prédéterminés de cette trajectoire, et
- correction rétroactive de ladite au moins une valeur de position angulaire estimée, par application d'une rotation sur cette valeur à l'aide des paramètres de rotation estimés, de manière à fournir au moins une valeur de position angulaire corrigée.

De façon optionnelle, l'étape de correction rétroactive comporte en outre une correction rétroactive des valeurs de position cartésienne à l'aide des valeurs d'accélération et de ladite au moins une valeur de position angulaire corrigée.

De façon optionnelle également :

- les valeurs d'accélération fournies par l'accéléromètre et les valeurs de vitesse angulaire fournies par le gyromètre sont exprimées dans un repère mobile lié à l'ensemble capteur, et
- lors de l'étape de traitement des valeurs fournies, l'estimation de ladite au moins une valeur de position angulaire est exprimée sous la forme de paramètres d'angles de rotation par rapport aux axes d'un repère global fixe lié au repère terrestre et l'estimation desdites valeurs de position cartésienne est exprimée sous la forme de coordonnées cartésiennes dans ce même repère global fixe.

De façon optionnelle également, l'étape de correction rétroactive est réalisée en une pluralité d'itérations, pour une correction itérative de ladite au moins une valeur de position angulaire estimée.

De façon optionnelle également, les paramètres de rotation sont ceux d'un quaternion.

De façon optionnelle également, la connaissance a priori de la trajectoire comporte des paramètres d'orientation angulaire, notamment par rapport à la verticale ou au nord, d'un plan considéré comme devant contenir la trajectoire.

De façon optionnelle également, la connaissance a priori de la trajectoire comporte les coordonnées cartésiennes d'au moins deux points considérés comme devant faire partie de la trajectoire.

De façon optionnelle également, la connaissance a priori de la trajectoire comporte des paramètres de cap ou de pente de la trajectoire.

De façon optionnelle également, l'étape de correction rétroactive est conçue pour que la correction réalisée à l'aide des paramètres de rotation estimés soit répartie de manière prédéterminée sur tout ou partie de ladite pluralité d'instants successifs.

De façon optionnelle également, la répartition prédéterminée de la correction rétroactive est définie de manière à faire croître linéairement des paramètres de correction calculés à l'aide des paramètres de rotation estimés sur tout ou partie de ladite pluralité d'instants successifs.

L'invention a également pour objet un programme d'ordinateur téléchargeable depuis un réseau de communication et/ou enregistré sur un support lisible par ordinateur et/ou exécutable par un processeur, comprenant des instructions pour l'exécution des étapes d'un procédé d'estimation d'une trajectoire selon l'invention, lorsque ledit programme est exécuté sur un ordinateur.

Enfin, l'invention a également pour objet un système d'estimation d'une trajectoire d'un élément ou corps mobile, comportant :

- un accéléromètre apte à fournir des valeurs d'accélération mesurées à des instants successifs d'un intervalle de temps donné,
- un gyromètre lié de manière solidaire à l'accéléromètre, apte à fournir des valeurs de vitesse angulaire mesurées à des instants successifs de cet intervalle de temps, et
- des moyens de traitement des valeurs fournies par l'accéléromètre et le gyromètre conçus pour la mise en oeuvre d'un procédé d'estimation d'une trajectoire selon l'invention.

De façon optionnelle, un tel système d'estimation d'une trajectoire peut comporter des moyens de fixation solidaire de l'accéléromètre et du gyromètre a un utilisateur, par exemple à la cheville de cet utilisateur, à un terminal mobile ou à un véhicule terrestre, aérien ou maritime.

L'invention sera mieux comprise à l'étude de quelques modes de réalisation décrits à titre d'exemples nullement limitatifs et illustrés par les dessins annexés sur lesquels :

- la figure 1 illustre un mode de réalisation d'un système selon un aspect de l'invention ;
- les figures 2a et 2b illustrent un exemple liée à la marche d'un piéton ;
- la figure 3 représente les repères global fixe NF et local BF ;
- la figure 4 illustre les trajectoires dans les repères global fixe NF et NF';
- la figure 5 illustre la correction rétroactive de l'orientation ou position angulaire ;
- les figures 6a, 6b et 6c illustrent les trajectoires estimées sans corriger la dérive (6a), en faisant une correction rétroactive de la dérive mais en appliquant une correction angulaire constante pendant la durée de chaque pas (6b), et en faisant une correction récursive et une correction angulaire rétroactive linéaire (6c) ; et
- les figures 7a et 7b illustrent les projections sur le plan horizontal des trajectoires des figures 6b et 6c : les courbes en trait gras représentent un aller et retour estimé, les courbes en traits fins représentent le trajet réellement réalisé.

Dans l'ensemble des figures, les éléments ayants les mêmes références sont similaires.

La présente invention propose, dès qu'un pas est détecté (grâce à un algorithme de détection de pas qui permet de déterminer le début et la fin d'un pas), d'intégrer les mesures du gyromètre pour déterminer une estimation de l'orientation, de ramener les mesures de l'accéléromètre dans le repère inertiel, de compenser le champ de gravité et d'intégrer deux fois l'accélération propre obtenue à chaque instant d'échantillonnage pour obtenir une trajctoire estimée sur la durée du pas.

Les connaissances a priori sur un pas sont utilisées et combinées à la trajectoire, c'est-à-dire exprimées sous la forme de paramètres prédéterminés de cette trajectoire qui représentent des informations prédéterminées, pour venir déterminer une correction d'orientation (qui minimise l'écart entre les informations prédéterminées et leur équivalent sur la trajectoire estimée) qu'on applique sur les angles estimés initialement.

Ensuite, en temps différé, on réutilise les mesures fournies par l'accéléromètre, ce qui permet d'estimer la trajectoire corrigée. Si l'écart entre les informations prédéterminées et leur équivalent sur la trajectoire dépasse un seuil, on recommence le cycle d'estimation d'une correction d'angle puis la réestimation de la trajectoire.

Sur la figure 1, un système d'estimation de trajectoire comprend un ensemble capteur EC muni d'un accéléromètre A à au moins un axe de mesure et un gyromètre G à au moins un axe de mesure liés de manière solidaire.

Le système comprend un module de correction rétroactive CORR_POS_A d'une position angulaire Position_A du gyromètre G parmi une pluralité d'instants successifs, correspondant aux instants d'échantillonnage sur un intervalle de temps, à partir des positions cartésiennes Position_C de l'accéléromètre A à au moins deux desdits instants successifs et d'informations prédéterminées INF_PRED_TRAJ représentatives de la trajectoire de l'accéléromètre A durant l'intervalle de temps $[t_1;t_2]$ par une rotation, qui, appliquée à la trajectoire, lui permet de vérifier au mieux lesdites informations prédéterminées, i.e. de minimiser un écart entre lesdites informations prédéterminées INF_PRED_TRAJ et leur équivalent sur la trajectoire obtenue après rotation. En d'autres termes équivalents, un modèle de recalage rotatoire de la trajectoire obtenue à l'aide des mesures de l'accéléromètre A pour qu'elle corresponde le mieux possible aux informations prédéterminées (i.e. la connaissance a priori exprimée sous la forme de paramètres prédéterminés de cette trajectoire) est inversé pour retrouver les paramètres de rotation de ce recalage rotatoire, ces paramètres de rotation étant ensuite utilisés pour corriger la position angulaire Position_A précitée.

L'intervalle de temps est délimité par une première borne $t_1$ et par une deuxième borne ultérieure $t_2$. Les échantillons sur l'intervalle de temps $[t_1;t_2]$ sont indicés $t^l$ de sorte que $l$ varie entre 1 et N, et $t^1$ vaut $t_1$, et $t^N$ vaut $t_2$. On définit la trajectoire comme l'ensemble des positions cartésiennes Position_C successives.

Les bornes $t_1$ et $t_2$ peuvent correspondre à deux instants successifs de vitesse nulle d'un pied, délimitant une phase entre deux instants de vitesse nulle d'un pied ou "MidStance" en langue anglaise.

Le système comprend, en outre, un module de mémorisation MEM_A de premières mesures $a^b$ délivrées par l'accéléromètre A, et un module de mémorisation MEM_G de deuxièmes mesures $\omega^b$ délivrées par le gyromètre G à ladite pluralité d'instants successifs dudit intervalle de temps, dans un repère mobile BF lié à l'ensemble capteur EC.

Un premier module de détermination DET_POS_A détermine la position angulaire Position_A du gyromètre G définie par des angles ou un quaternion représentant la rotation permettant de passer du repère NF au repère BF audits instants successifs $t^1$, $t^2$, ... $t^{N-1}$ $t^N$, à partir des deuxièmes mesures $\omega^b$.

Un deuxième module de détermination DET_POS_C détermine la position cartésienne Position_C de l'accéléromètre A, dans le repère global fixe NF, auxdits instants successifs $t^1$, $t^2$, ... $t^{N-1}$, $t^N$, à partir des premières mesures $a^b$ et de la position angulaire Position_A fournie par le premier module de détermination DET_POS_A, après un changement de repère effectué par un module de changement de repère CR permettant de passer du repère local BF au repère NF (car après itérations, NF' tend à se confondre avec NF, comme décrit ultérieurement dans la description).

Le module de correction rétroactive CORR_POS_A est adapté pour corriger itérativement la position angulaire Position_A. La correction peut être appliquée soit à des vitesses angulaires (i.e. avant une intégration des mesures du gyromètre G, soit appliquée à des angles (i.e. après une intégration des mesures du gyromètre G)

Le module de correction rétroactive CORR_POS_A est, en outre, adapté pour corriger la position cartésienne Position_C à au moins un desdits instants successifs $t^1$, $t^2$, ... $t^{N-1}$, $t^N$.

Les informations prédéterminées INF_PRED_TRAJ peuvent comprendre une information de trajectoire sensiblement planaire de l'accéléromètre entre un premier instant et un deuxième instant différents, parmi lesdits instants successifs $t^1$, $t^2$, ... $t^{N-1}$, $t^N$ dudit intervalle de temps $[t_1;t_2]$.

L'orientation du plan autour duquel se situent les points de la trajectoire peut être connue par rapport à la verticale ou au nord. La trajectoire entre lesdits premier et deuxième instants peut comprendre un cap connu et/ou une pente connue.

Les premier et deuxième instants peuvent être les bornes de l'intervalle de temps.

Les informations prédéterminées INF_PRED_TRAJ peuvent comprendre des positions cartésiennes possibles mémorisées, c'est-à-dire les coordonnées cartésiennes de points considérés a priori comme devant faire partie de la trajectoire.

Le système peut être adapté pour être fixé à un utilisateur, à un terminal mobile, ou à un véhicule terrestre, aérien ou maritime. Par exemple, il peut être muni de moyens de fixation à proximité d'une cheville d'un utilisateur.

La présente invention est à mettre en comparaison avec une démarche classique d'estimation de la trajectoire d'un solide à partir de mesures fournies par un gyromètre et un accéléromètre comprenant quatre étapes :

- intégrer les mesures gyrométriques afin d'estimer l'orientation du repère BF lié à l'ensemble capteur EC par rapport au repère de référence NF ;
- ramener les mesures accélérométriques du repère BF de l'ensemble capteur EC dans le repère de référence NF ;
- compenser la gravité pour obtenir l'accélération propre du solide dans le repère de référence ; et
- effectuer une double intégration temporelle de cette accélération.

Compte tenu des biais existant sur les mesures, il est notoirement connu que cette démarche ne peut pas à long terme fournir une trajectoire correcte. Aussi, des techniques sont connues pour essayer de corriger la dérive, ou "drift" en langue anglaise, de la trajectoire.

Une originalité de la présente invention vient du fait qu'à partir de connaissances sur la trajectoire (la trajectoire est définie par l'ensemble des positions cartésiennes entre deux instants donnés), on détermine la rotation qui, en tournant la trajectoire, permet de satisfaire les connaissances sur la trajectoire, de venir corriger l'orientation ou position angulaire Position_A en se servant de cette rotation puis de recalculer la trajectoire.

Notons que la correction est appliquée sur une fenêtre temporelle donnée. En outre, la démarche de correction peut être itérative.

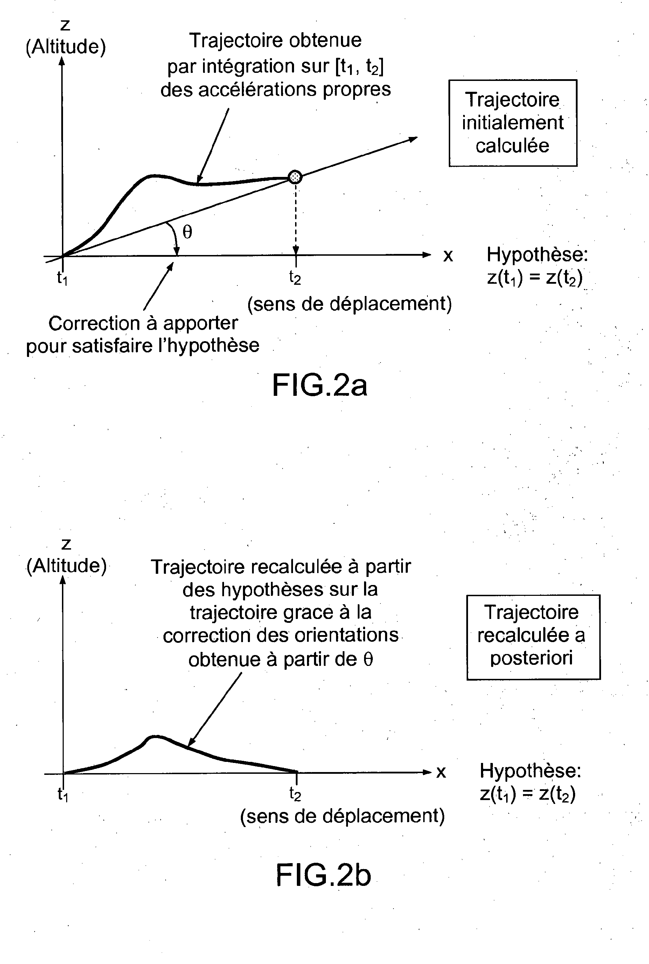

Prenons l'exemple de la marche illustré sur les figures 2a et 2b. A partir d'hypothèses sur le mouvement, par exemple que l'altitude au début et à la fin du pas sont identiques, on déduit la correction d'angle θ à appliquer pour que les contraintes sur la trajectoire soient satisfaites, ici l'altitude à l'instant $t_1$ est égale à l'altitude à l'instant $t_2$.

Cette correction Pos_A_C est répartie, d'une manière prédéterminée à définir, par exemple linéairement, par une division équirépartie de la correction en la divisant par le nombre d'échantillons N, sur les attitudes ou positions angulaires Position_A déterminées à partir des mesures gyrométriques. Puis la trajectoire est recalculée.

On définit ci-après les repères utilisés dans cette demande de brevet ainsi que le modèle des capteurs utilisés.

On suppose que les unités de mesures inertielles ou IMU pour "Inertial Measurement Units" en langue anglaise, i.e. l'ensemble capteur EC, mesurent des vecteurs en trois dimensions ou 3D.

Tous ces vecteurs sont mesurés dans le repère BF de l'ensemble capteur EC, ce qui signifie que les mesures dépendent de l'attitude ou orientation du capteur.

L'ensemble capteur EC est fixé au corps mobile. Ainsi, la mesure du vecteur de rotation instantanée est une nécessité, à cause des changements d'attitude ou position angulaire de l'ensemble capteur EC au cours du temps.

Tout d'abord, il faut définir quatre repères respectivement notés NF, BF, SF et NF'.

Le repère Nord ou repère global fixe, ou NF pour "North Frame" en langue anglaise, est un repère fixe par rapport au référentiel terrestre. Il est utilisé durant tout le mouvement (marche ou course). Le repère Nord NF peut être considéré comme le repère de référence : les orientations ou positions angulaires et les positions ou positions cartésiennes sont mesurées dans ce repère. Le repère global fixe NF est défini par son origine $O_{NF}$ et ses axes ($x_{NF}$, $y_{NF}$, $z_{NF}$). Les axes se réfèrent au repère terrestre par les directions Est, Nord, et Haut. Son origine $O_{NF}$ peut correspondre à l'endroit où le mouvement débute ou à tout autre endroit. Les données exprimées dans ce repère sont notées avec un exposant n.

Le repère local ou lié au capteur ou BF pour "Body Frame" en langue anglaise est le référentiel de l'ensemble capteur EC dans lequel les données brutes sont mesurées. Son centre est $O_{BF}$. Les données dans ce repère sont notées avec un exposant b. Ses axes ($x_{BF}$, $y_{BF}$, $z_{BF}$) correspondent aux axes des capteurs (dans le cas de capteurs triaxiaux) à chaque instant. Les coordonnées de son origine $O_{BF}$ dans le repère global fixe NF correspondent à l'emplacement du capteur dans le repère global fixe NF.

Un repère intermédiaire ou SF pour "Step Frame" en langue anglaise est défini. Dans la présente demande, le repère intermédiaire SF est un repère lié à la Terre, mais seulement pendant un intervalle de temps $[t_1,t_2]$ (par exemple au cours d'un pas). Ce repère est utilisé pour des mouvements ayant moins de six degrés de liberté ou six DOF pour "Degrees Of Freedom" en langue anglaise. Par exemple, il est utilisé quand l'ensemble capteur EC a un axe de rotation invariant et/ou un mouvement plan durant l'intervalle de temps $[t_1,t_2]$.

$x_{SF}$ est l'axe de rotation et l'ensemble capteur EC est soumis à un mouvement plan dans le plan défini par ($y_{SF}$, $z_{SF}$). Chaque fois que le plan est vertical, $y_{SF}$ est choisi pour être l'axe horizontal, tandis que l'axe $z_{SF}$ est l'axe vertical. L'origine de ce repère SF correspond à l'emplacement du capteur au début de l'intervalle de temps (par exemple à t=$t_1$). Les données exprimées dans ce repère sont notées avec un exposant s.

Le repère NF' est un repère proche du repère NF qui tient compte de la dérive due à l'intégration du gyromètre. En supposant cette dérive nulle NF et NF' sont confondus. Sinon, le repère NF' est défini par les axes ($x_{NF'}$, $y_{BF}$, $z_{BF}$) et le centre $O_{BF}$.

Le repère NF' est le repère par rapport auquel sont exprimées avant correction la position angulaire Position_A obtenue en intégrant le gyromètre et la position cartésienne Position_C estimée en double intégrant l'accélération propre.

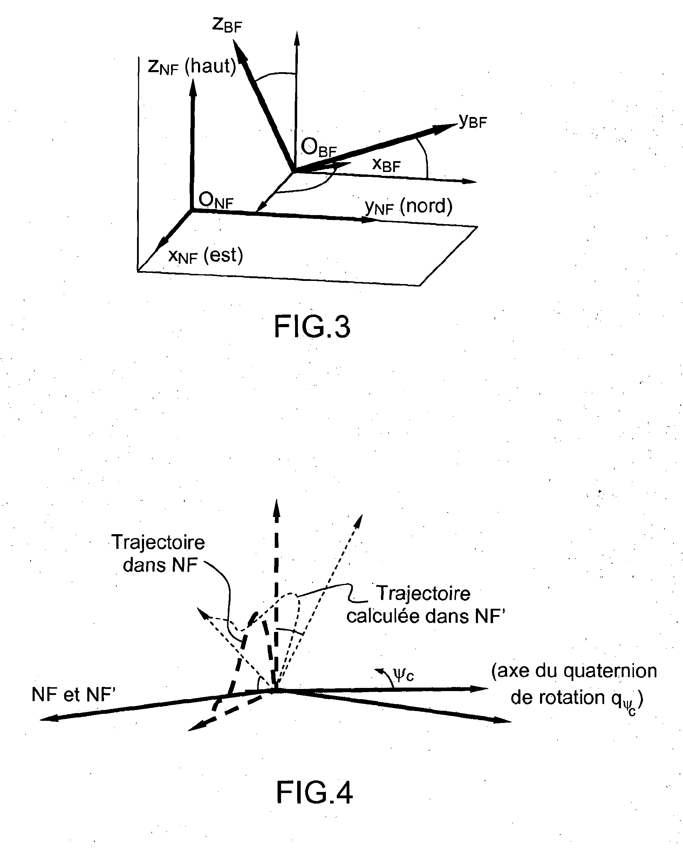

La figure 3 représente les repères global fixe NF et local BF. Comme on le voit, le repère local BF est lié au repère global fixe NF par une translation et une rotation.

La rotation entre les repères nécessaire pour obtenir les données mesurées par l'ensemble capteur EC dans le repère NF doit être calculée. Pour ce faire, est définie une matrice de rotation $\mathbf{R}_{nb}$ qui fait passer un vecteur x, exprimé dans le repère BF lié à l'ensemble capteur, au même vecteur exprimé dans le repère global fixe NF par la relation suivante:

$$\mathbf{x}^n = \mathbf{R}_{nb}\,\mathbf{x}^b \qquad (1)$$

La matrice de transformation inverse est $\mathbf{R}_{bn} = \mathbf{R}_{nb}^{-1} = \mathbf{R}_{nb}^{T}$

L'orientation du repère fixe NF dans le repère local BF peut être exprimée par le quaternion unité $q_{bn}$, avec $\|q_{bn}\|_2 = 1$.

Notons que dans la suite de la description, les position angulaires ou attitudes et corrections angulaires sont exprimées par des quaternions, mais de manière non limitatives, ces valeurs pourraient être exprimées différemment, par exemple des angles d'Euler.

Dans la présente demande, tous les quaternions sont, par exemple, des quaternions unitaires.

Le quaternion unité $q_{bn}$ est décrit avec l'angle de rotation $\psi$ autour de l'axe de rotation défini par le vecteur unitaire de direction $\mathbf{q}_{bn}$ à trois dimensions ou avec un vecteur unitaire à quatre dimensions comme suit :

$$q_{bn} = \begin{bmatrix} \cos(\psi/2) \\ \sin(\psi/2)\mathbf{q}_{bn} \end{bmatrix} = [q_{bn,0} \quad q_{bn,1} \quad q_{bn,2} \quad q_{bn,3}]^T \qquad (2)$$

On peut noter que $q_{nb}$ est le conjugué de $q_{bn}$, et que :

$$q_{nb} = \begin{bmatrix} \cos(\psi/2) \\ -\sin(\psi/2)\mathbf{q}_{bn} \end{bmatrix} = [q_{bn,0} \quad -q_{bn,1} \quad -q_{bn,2} \quad -q_{bn,3}]^T \qquad (3)$$

La matrice de rotation $\mathbf{R}_{nb}$ est liée aux quaternions par la relation suivante:

$$\mathbf{R}_{bn} = \begin{bmatrix} 2q_{bn,0}^2 - 1 + 2q_{bn,1}^2 & 2q_{bn,1}q_{bn,2} - 2q_{bn,0}q_{bn,3} & 2q_{bn,1}q_{bn,3} + 2q_{bn,0}q_{bn,2} \\ 2q_{bn,1}q_{bn,2} + 2q_{bn,0}q_{bn,3} & 2q_{bn,0}^2 - 1 + 2q_{bn,2}^2 & 2q_{bn,2}q_{bn,3} - 2q_{bn,0}q_{bn,1} \\ 2q_{bn,1}q_{bn,3} - 2q_{bn,0}q_{bn,2} & 2q_{bn,2}q_{bn,3} + 2q_{bn,0}q_{bn,1} & 2q_{bn,0}^2 - 1 + 2q_{bn,3}^2 \end{bmatrix} \quad (4)$$

On donne maintenant le modèle des mesures fournies par les capteurs utilisés dans un mode de réalisation pour lequel l'accéléromètre et le gyromètre sont triaxiaux.

L'accéléromètre mesure la somme des accélérations appliquées au capteur.

Sur Terre, l'accéléromètre mesure, en sus de la gravité terrestre, l'accélération propre subie par le capteur. L'accélération propre $\mathbf{a}_p$ est définie comme l'accélération externe subie par le capteur, qui est égale à la dérivée temporelle de la vitesse du capteur. Ainsi, l'accélération $\mathbf{a}^b$ fournie par le capteur dans le repère local BF est donnée par la relation suivante :

$$\mathbf{a}^b(t) = \mathbf{R}_{bn}(t)\mathbf{a}^n(t) = \mathbf{R}_{bn}(t)(\mathbf{a}_p^n(t) - \mathbf{g}^n) \qquad (5)$$

Dans laquelle t représente le temps, $\mathbf{g}^n = [0\ 0\ -g]^T$ représente le vecteur de gravité terrestre avec $g$ = 9.81 m/s$^2$ et $\mathbf{a}_p^n$ représente l'accélération propre dans le repère global fixe NF.

Notons que cette équation est purement statique, contrairement à l'équation relative aux mesures du gyromètre qui est dynamique. Par ailleurs, du bruit peut corrompre les mesures.

Le gyromètre fournit des mesures permettant de déterminer un quaternion d'orientation. Soit $q_{bn}(t) = [q_{bn,0}(t)\ q_{bn,1}(t)\ q_{bn,2}(t)\ q_{bn,3}(t)]^T$ le quaternion variable dans le temps décrivant l'orientation du repère local BF par rapport au repère global fixe NF. Il est connu que le modèle dynamique du quaternion d'orientation $q_{bn}(t)$ suit l'équation différentielle du premier ordre suivante :

$$\dot{q}_{bn}(t) = \mathbf{\Omega}^b(t)q_{bn}(t) = \frac{1}{2}\begin{bmatrix} 0 & -\omega_x^b(t) & -\omega_y^b(t) & -\omega_z^b(t) \\ \omega_x^b(t) & 0 & \omega_z^b(t) & -\omega_y^b(t) \\ \omega_y^b(t) & -\omega_z^b(t) & 0 & \omega_x^b(t) \\ \omega_z^b(t) & \omega_y^b(t) & -\omega_x^b(t) & 0 \end{bmatrix}\begin{bmatrix} q_{bn,0}(t) \\ q_{bn,1}(t) \\ q_{bn,2}(t) \\ q_{bn,3}(t) \end{bmatrix} \qquad (6)$$

dans laquelle, $\mathbf{\omega}^b = [\omega_x^b(t)\ \omega_y^b(t)\ \omega_z^b(t)]^T$ désigne la vitesse angulaire donnée par le gyromètre exprimée dans le repère local BF.

Pour calculer le quaternion d'orientation (unitaire) $q_{bn}(t)$, le premier module de détermination DET_POS_A de la position angulaire Position_A du gyromètre G intègre l'équation différentielle (6) à partir de $q_{bn}(0)$, où $q_{bn}(0)$ correspond à l'orientation initiale.

Comme la fonction continue $\omega^b(t)$ n'est pas connue, mais seulement un échantillonnage d'échantillons $\omega^{b(l)}$, les échantillons $q_{bn}^{(l)}$ de quaternion d'orientation peuvent être déterminés par intégration récursive de l'équation (6).

On suppose que la période d'échantillonnage $T_s$ est suffisamment petite pour supposer que $\omega^b(t)$ est constant entre les indices de temps $(l-1)$ et $(l)$, et que $\omega^b(t)$ est égal à $\omega^{b(l-1)}$ sur cet intervalle de temps. Ainsi $q_{bn}^{(l)}$ est calculé par l'intégration de l'équation différentielle (6), à partir de $q_{bn}^{(l-1)}$, pendant une durée $T_s$ :

$$q_{bn}^{(l)} = \exp(\mathbf{\Omega}^{b(l-1)}T_s)q_{bn}^{(l-1)} \qquad (7)$$

Il est possible de montrer que le calcul de $q_{bn}^{(l)}$ dans la relation (7) peut être obtenu à partir du produit $\otimes$ associé aux quaternions, par la relation suivante :

$$q_{bn}^{(l)} = \mathbf{f}_q(q_{bn}^{(l-1)}, \mathbf{\omega}^{b(l-1)}) = q_{-\omega}^{b(l-1)} \otimes q_{bn}^{(l-1)} \qquad (8)$$

dans laquelle :

$$q_{-\omega}^{b(l)} = [q_{-\omega,0}^{b(l)} \ q_{-\omega,1}^{b(l)} \ q_{-\omega,2}^{b(l)} \ q_{-\omega,3}^{b(l)}]^T$$

$$= \begin{bmatrix} \cos\left(\left\|\omega^{b(l)}\right\|T_s/2\right) \\ -\sin\left(\left\|\omega^{b(l)}\right\|T_s/2\right) \mathbf{q}_\omega^{b(l)} \end{bmatrix} \doteq \begin{bmatrix} \cos\left(\left\|\omega^{b(l)}\right\|T_s/2\right) \\ -\dfrac{\sin\left(\left\|\omega^{b(l)}\right\|T_s/2\right)}{\left\|\omega^{b(l)}\right\|}\omega^{b(l)} \end{bmatrix} \quad (9)$$

désigne le quaternion de rotation d'angle $\|\omega^{b(l)}\|T_s$ autour du vecteur $\mathbf{q}_\omega^{b(l)}$

Notons que les mesures du gyromètre sont corrompues par du bruit et une dérive (ou offset). Par conséquent, l'intégration directe de l'équation (6) (ou de sa version discrétisée) conduit à une estimation corrompue du quaternion d'attitude, et donc de l'attitude ou position angulaire.

On peut remarquer que dans l'état de la technique, la dérive d'orientation est généralement exprimée comme une orientation erronée du repère local BF. Comme le principal problème d'orientation est de faire un changement de repère pour exprimer les données d'accélération du repère local BF au repère global fixe NF, on considère qu'un quaternion $q_{nb}$ erroné ne permet pas un changement de repère du repère local BF au repère global fixe NF, mais au repère NF' ayant dérivé, i.e. tourné progressivement. Par conséquent, NF' est défini comme un repère ayant dévié par rapport au repère global fixe NF ; il est décrit par son orientation par rapport au repère global fixe NF donnée par le quaternion $q_{n'n}$. Le repère NF' dérive lentement au cours du temps et son quaternion d'orientation $q_{n'n}$ varie donc lentement au cours du temps de façon que ces quaternions satisfassent l'équation suivante: $q_{bn}(t) = q_{bn'}(t) \otimes q_{n'n}(t)$.

Ci-suit la description d'un exemple de réalisation, illustrée avec des quaternions, appliqué au cas de la marche d'un individu.

On décrit maintenant la prise en compte de l'erreur sur le champ de gravité lors du calcul des accélérations propres.

Soit $[t_1^\kappa, t_2^\kappa]$ l'intervalle de temps de la phase SW de déplacement ou de vol du pied (pied en l'air) de la foulée de l'étape de détection numéro $\kappa$ (correspondant au pas numéro $\kappa$). On suppose que $q_{n'n}(t)$ est invariant dans le temps au cours de chaque phase de vol SW pour $t \in [t_1^\kappa, t_2^\kappa]$.

Un autre problème est la dérive de la position à cause de la double intégration temporelle des mesures d'accélération.

Afin de limiter la dérive de position, l'accélération est intégrée uniquement durant la phase de vol SW, tandis que pendant le temps restant, la vitesse est fixée à zéro.

A partir de méthodes de détection de pas, il est possible de déterminer si le pied est ou non en mouvement.

La vitesse de la cheville d'un piéton est calculée pas par pas, tandis que l'orientation est déterminée continûment à l'indice de temps I avec le quaternion $\dot{q}_{bn'}^{(l)}$

qui détermine l'orientation du repère NF' dans le repère local BF (et non le repère global fixe NF en raison de l'intégration du bruit et de la dérive existant sur les mesures du gyromètre).

En l'absence d'observation de l'orientation, il est impossible de déterminer le quaternion de rotation $q_{nn'}$. C'est pourquoi on n'est pas en mesure de déterminer $q_{bn}$.

Par conséquent, on se contente de calculer l'orientation du capteur dans le repère NF' par l'intégration de mesures de la vitesse angulaire en trois dimensions :

$$\dot{\omega}^b = [\omega_x^b \ \omega_y^b \ \omega_z^b]^T, \quad (10)$$

comme dans la relation

$$q_{bn'}^{(l)} = q_{-\omega}^{b(l-1)} \otimes q_{bn'}^{(l-1)} \quad (11)$$

dans laquelle, $\otimes$ représente le produit de deux quaternions et

$$q_{-\omega}^{b(l)} = \left[\cos(\left\|\omega^{b(l)}\right\| T_s/2) \quad \sin(\left\|\omega^{b(l)}\right\| T_s/2) \, \mathbf{q}_{-\omega}^{b\ T}\right]^T \qquad (12)$$

$T_s$ est la période d'échantillonnage des capteurs A et G, et $\mathbf{q}_{-\omega}^{b} = -\omega^{b}/\left\|\omega^{b}\right\|$ est l'axe de la rotation défini par le quaternion $q_{bn}$.

Une fois que l'orientation du repère local BF est déterminée, les termes d'accélération sont tout simplement exprimés dans le repère NF' qui a dérivé, comme dans la relation :

$$\mathbf{a}^{n'(l)} = \mathbf{R}_{n'b}^{(l)} \mathbf{a}^{b(l)} \qquad (13)$$

dans laquelle $\mathbf{R}_{n'b}^{(l)}$ est liée à $q_{n'b}^{(l)}$ comme dans la relation (4). Cette étape est effectuée par le module de changement de repère CR.

Une fois qu'on connaît $\mathbf{a}^{n'}$, la gravité doit être compensée pour calculer l'accélération propre.

Le problème principal est que la direction verticale du repère NF' est différente de celle du repère global fixe NF.

Même si au début on commence avec une orientation de capteur connue, l'orientation calculée dérive dans le temps. Cela signifie que la gravité terrestre $\mathbf{g}^{n'}$ ne peut pas être déterminée avec précision. Il n'est pas plus acceptable de supposer que $\mathbf{g}^{n'} = g[0 \ 0 \ -1]^T$ pour déduire la gravité à partir de l'accélération $\mathbf{a}^{n'}$.

De ce fait, la relation suivante :

$$\mathbf{a}_{p}^{n'} = \mathbf{a}^{n'} + \mathbf{g}^{n'} \neq \mathbf{a}^{n'} + \mathbf{g}^{n} \qquad (14)$$

montre que la gravité n'est pas la même dans les deux repères.

En fait, une telle approximation corromprait l'accélération propre. Par conséquent, une erreur importante serait introduite dans l'estimation de la position ou position cartésienne, après la double intégration de ce biais affectant l'accélération propre.

Une autre façon de déterminer $\mathbf{g}^{n'}$ consiste à utiliser l'accélération $\mathbf{a}^{n'}(t)$ au cours de l'intervalle de temps $[t_1^{\kappa}, t_2^{\kappa}]$. Plus précisément, on a $\mathbf{v}_I^{n'}(t_1^{\kappa}) = \mathbf{v}_I^{n'}(t_2^{\kappa}) = 0$, $\mathbf{v}_I^{n'}$ désignant le vecteur vitesse en trois dimensions obtenu à partir de l'intégration temporelle de $\mathbf{a}_p^{n'}$.

En supposant que le quaternion $q_{n'n}$ est invariant dans le temps pour $t \in [t_1^{\kappa}, t_2^{\kappa}]$, on obtient la relation suivante :

$$\begin{aligned}
\int_{t_1^{\kappa}}^{t_2^{\kappa}} \mathbf{a}^{n'}(t)dt &= \int_{t_1^{\kappa}}^{t_2^{\kappa}} \mathbf{R}_{n'n}\left(\mathbf{a}_p^{n}(t) - \mathbf{g}^{n}\right)dt \\
&= \mathbf{R}_{n'n} \int_{t_1^{\kappa}}^{t_2^{\kappa}} \left(\mathbf{a}_p^{n}(t) - \mathbf{g}^{n}\right)dt \\
&= \mathbf{v}_I^{n'}(t_2^{\kappa}) - \mathbf{v}_I^{n'}(t_1^{\kappa}) - (t_2^{\kappa} - t_1^{\kappa})\mathbf{g}^{n'} \\
&= -(t_2^{\kappa} - t_1^{\kappa})\mathbf{g}^{n'}
\end{aligned} \qquad (15)$$

dans laquelle $\mathbf{R}_{n'n}$ est lié à $q_{n'n}$, selon la relation (4).

Selon la relation (15), la valeur moyenne de a" sur l'intervalle $[t_1^{\kappa}, t_2^{\kappa}]$ est égale à la gravité $\mathbf{g}^{n'}$. Ainsi, il faut centrer $\mathbf{a}^{n'}$ avant la double intégration pour compenser la gravité terrestre, comme dans la relation suivante :

$$\mathbf{a}_p^{n'}(t) = \mathbf{a}^{n'}(t) - \frac{1}{t_2^{\kappa} - t_1^{\kappa}} \int_{t_1^{\kappa}}^{t_2^{\kappa}} \mathbf{a}^{n'}(t)dt \qquad (16)$$

En fin de compte, l'accélération est intégrée deux fois, séparément pour chaque pas, afin de calculer, après tout, la trajectoire complète de la cheville. On a le système suivant :

$$\begin{aligned}
\mathbf{v}_I^{n'}(t) &= \mathbf{v}_I^{n'}(t_1^\kappa) + \int_{t_1^\kappa}^t \mathbf{a}_P^{n'}(t)dt \\
\mathbf{p}_I^{n'}(t) &= \mathbf{p}_I^{n'}(t_2^{\kappa-1}) + \int_{t_1^\kappa}^t \mathbf{v}_I^{n'}(t)dt
\end{aligned} \qquad (17)$$

dans lequel $\mathbf{p}_I^{n'} = [x_I^{n'} \; y_I^{n'} \; z_I^{n'}]^T$ désigne les coordonnées cartésiennes en trois dimensions de l'ensemble capteur EC dans NF', $\mathbf{v}_I^{n'}(t_1^\kappa) = 0$ /s, $\forall \kappa$, et $\mathbf{p}_I^{n'}(0)$ est initialisé à $O_{NF}$.

Comme l'accélération dans le repère NF' est centrée lors de chaque pas (16), alors $\mathbf{v}_I^{n'}(t_2^\kappa) = 0$ m/s $\forall \kappa$.

Les étapes correspondant aux relations (14) à (17) sont réalisées par le deuxième module de détermination DET_POS_C de la position cartésienne Position_C de l'accéléromètre A.

Ici, la position calculée peut encore être sujette à dérive à cause de $q_{n'n}(t)$. Pour limiter la dérive et corriger la trajectoire, il est possible d'inclure des informations supplémentaires sur les caractéristiques de la marche.

Par ailleurs, certaines caractéristiques de la trajectoire de la cheville sont exploitées. Par exemple, on peut admettre que la trajectoire de la cheville est incluse dans un plan (mouvement plan). En supposant que le plan de la trajectoire du vrai pas (plan de la marche) est vertical, alors toute dérive d'orientation inclinerait le plan vertical.

Supposons que les hypothèses suivantes soient remplies, correspondant aux informations prédéterminées INF_PRED_TRAJ (c'est-à-dire la connaissance a priori de la trajectoire exprimée sous la forme de paramètres prédéterminés de cette trajectoire) :

- le piéton marche sur un plancher horizontal: $z_I^n(t_1^\kappa) = z_I^n(t_2^\kappa)$ et

- le plan de la marche est vertical: $\mathbf{z}_{SF}^n = \mathbf{z}_{NF}^n = [0 \, 0 \, 1]^T$.

Soit $q_{\psi_c}^\kappa$ le quaternion qui tourne la trajectoire calculée pour satisfaire au mieux les hypothèses précédentes, la figure 4 illustre le cas d'une dérive de trajectoire (pour un pas) et la trajectoire correspondante que nous supposons être la "trajectoire réelle" ou "vraie". Le quaternion $q_{\psi_c}$ permet de corriger la trajectoire de l'étape. Il constitue donc à proprement parler l'application d'un modèle de recalage rotatoire de la trajectoire telle que calculée lors des étapes correspondant aux relations (14) à (17) sous la contrainte d'une connaissance a priori sur cette trajectoire constituée des hypothèses précédentes.

Considérons $(\mathbf{e}_1^{n'}, \mathbf{e}_2^{n'}, \dot{\mathbf{e}}_3^{n'})$ les trois vecteurs qui sont liés au plan de la marche pour un pas dans le repère NF', calculé à la fin de l'étape $(t = t_2^\kappa)$, on a le système suivant:

$$\begin{aligned}
\mathbf{e}_1^{n'} &= [e_{1,x}^{n'} \; e_{1,y}^{n'} \; e_{1,z}^{n'}]^T &= \mathbf{x}_{SF}^{n'} \\
\mathbf{e}_2^{n'} &= [e_{2,x}^{n'} \; e_{2,y}^{n'} \; e_{2,z}^{n'}]^T &= \frac{\mathbf{p}_I^{n'}(t_2^\kappa) - \mathbf{p}_I^{n'}(t_1^\kappa)}{\left\| \mathbf{p}_I^{n'}(t_2^\kappa) - \mathbf{p}_I^{n'}(t_1^\kappa) \right\|} \\
\mathbf{e}_3^{n'} &= [e_{3,x}^{n'} \; e_{3,y}^{n'} \; e_{3,z}^{n'}]^T &= \mathbf{e}_1^{n'} \wedge \mathbf{e}_2^{n'}
\end{aligned} \qquad (18)$$

p représentant les positions cartésiennes calculée par la double intégration de l'accélération propre. $\mathbf{x}_{SF}^{n'}$ fait référence à l'axe de rotation invariant dans le temps durant le pas, $\mathbf{p}_I^{n'}$ est fourni par le système (17) et $\wedge$ désigne le produit vectoriel.

Pour satisfaire les hypothèses précédentes, ces vecteurs exprimés dans le repère fixe NF peuvent être écrits selon le système suivant :

$$\begin{aligned}
\mathbf{e}_1^n &= [e_{1,x}^n \ e_{1,y}^n \ 0]^T \\
\mathbf{e}_2^n &= [e_{2,x}^n \ e_{2,y}^n \ 0]^T \\
\mathbf{e}_3^n &= \mathbf{e}_1^n \wedge \mathbf{e}_2^n
\end{aligned} \qquad (19)$$

Comme on ignore le "vrai" cap, il est impossible de déterminer la valeur exacte du cap dans le repère global fixe NF. En d'autres termes, on est en mesure de corriger la trajectoire indépendamment du cap car on n'est pas en mesure d'ajuster le cap de la foulée. En l'espèce, on considère dans le repère NF le même cap de foulée que celui dans le repère NF'.

On peut alors écrire :

$$\begin{cases} e_{2,x}^n = \dfrac{e_{2,x}^{n'}}{\sqrt{\left(e_{2,x}^n\right)^2 + \left(e_{2,y}^n\right)^2}} \\ e_{2,x}^n = \dfrac{e_{2,y}^{n'}}{\sqrt{\left(e_{2,x}^n\right)^2 + \left(e_{2,y}^n\right)^2}} \end{cases} \quad et \quad \begin{cases} e_{1,x}^n = e_{2,y}^n \\ e_{1,y}^n = -e_{2,x}^n \end{cases} \qquad (20)$$

La dérive d'orientation peut être représentée par la matrice de rotation $\mathbf{R}_c$ ou de façon équivalente, avec le quaternion $q_{\psi c}$. Pour déterminer le quaternion de rotation $q_{\psi c}$ ou la matrice de rotation $\mathbf{R}_c$, c'est-à-dire pour inverser le modèle de recalage rotatoire de la trajectoire qui a dérivé, il est uniquement nécessaire de connaître la valeur de deux vecteurs non colinéaires dans le repère NF' et leurs valeurs dans le repère global fixe NF.

Notons que les vecteurs $\{\mathbf{e}_1, \mathbf{e}_2, \mathbf{e}_3\}$ vérifient les caractéristiques de rotation (produit scalaire et norme). On suppose également que ces vecteurs sont linéairement indépendants, sinon le quaternion de rotation n'est pas unique. Aussi, la matrice de rotation de correction $\mathbf{R}_c$ est donnée par la relation suivante :

$$\mathbf{R}_c = [\mathbf{e}_1^n \ \mathbf{e}_2^n \ \mathbf{e}_3^n][\mathbf{e}_1^{n'} \ \mathbf{e}_2^{n'} \ \mathbf{e}_3^{n'}]^{-1} \qquad (21)$$

Aussi $q_{\psi c}$ peut être déduit de $\mathbf{R}_c$ par des calculs classiques d'inversion de la formule (4).

Une autre manière de calculer $q_{\psi c}$ est de déterminer l'axe de rotation $\mathbf{q}_c$ et l'angle de rotation $\psi_c$, sans calculer la matrice de rotation. Dans ce cas, on obtient les relations suivantes :

$$\mathbf{q}_c = \frac{(\mathbf{e}_1^n - \mathbf{e}_1^{n'}) \wedge (\mathbf{e}_2^n - \mathbf{e}_2^{n'})}{\left\| \mathbf{e}_1^n - \mathbf{e}_1^{n'} \right\| \left\| \mathbf{e}_2^n - \mathbf{e}_2^{n'} \right\|} \qquad (22)$$

et

$$\psi_c = \text{sign}(| [\mathbf{q}_c \ \mathbf{e}_1^n \ \mathbf{e}_1^{n'}] |) \text{atan}\left( \frac{\left\| (\mathbf{e}_1^n \wedge \mathbf{q}_c) \wedge (\mathbf{e}_1^{n'} \wedge \mathbf{q}_c) \right\|}{(\mathbf{e}_1^n \wedge \mathbf{q}_c) \cdot (\mathbf{e}_1^{n'} \wedge \mathbf{q}_c)} \right) \qquad (23)$$

$(\mathbf{x} \cdot \mathbf{y})$ désignant le produit scalaire de deux vecteurs, $| \ |$ correspondant au déterminant d'une matrice carrée, et $\| \ \|$ correspondant à la norme euclidienne.

L'angle donné par atan() dans la relation (23) est définie dans l'intervalle $[0 \ \pi]$.

Dans tous les cas, on remarquera que le calcul direct de $q_{\psi c}$ ou la détermination de l'axe de rotation $\mathbf{q}_c$ et de l'angle de rotation $\psi_c$ constituent bien une inversion de modèle de recalage rotatoire.

Les étapes correspondant aux relations (18) à (23) sont réalisées par le module de correction rétroactive CORR_POS_A.

Au cours d'un déplacement d'un piéton dans un espace couvert ou "indoor" en langue anglaise, il est fréquent de pouvoir supposer une marche horizontale (ou une inclinaison fixe correspondant à des escaliers). Ainsi, on peut tourner la trajectoire calculée de manière à avoir un déplacement d'inclinaison prédéfinie, par exemple horizontal. Dans le présent scénario, en plus de l'hypothèse d'un déplacement horizontal, on impose une trajectoire de cheville sensiblement dans un plan de mouvement vertical.

En plus de ces hypothèses, deux hypothèses sur l'évolution de la dérive du repère NF' par rapport au repère NF sont possibles.

La première suppose que $q_{n'n}(t)$ est invariant dans le temps pour de courtes durées, plus précisément au cours de la phase de vol de chaque pas. Ainsi, pour chaque étape, le repère NF' est supposé être lié au repère global fixe NF par une rotation constante. Si $q_{n'n}(t)$ est invariant dans le temps pour $t \in [t_1^\kappa, t_2^\kappa]$, alors le quaternion $q_{\psi_c}^\kappa = \ddot{q}_{nn'}^\kappa$ est déterminé pour chaque pas.

Ensuite, la trajectoire est recalculée avec une correction qui est appliquée pas par pas comme explicité dans le système suivant :

$$
\begin{aligned}
\tilde{\mathbf{a}}_I^n(t) &= \mathbf{R}_c^\kappa \mathbf{a}_I^{n'}(t_1^\kappa) \quad \text{for } t \in [t_1^\kappa, t_2^\kappa] \\
\tilde{\mathbf{v}}_I^n(t) &= \tilde{\mathbf{v}}_I^n(t_1^\kappa) + \int_{t_1^\kappa}^t \tilde{\mathbf{a}}_p^n(t)dt = \mathbf{R}_c^\kappa \tilde{\mathbf{v}}_I^{n'}(t) \quad\quad\quad (24) \\
\tilde{\mathbf{p}}_I^n(t) &= \tilde{\mathbf{p}}_I^n(t_2^{\kappa-1}) + \int_{t_1^\kappa}^t \tilde{\mathbf{v}}_I^n(t)dt
\end{aligned}
$$

dans lequel $\mathbf{R}_c^\kappa$ est la matrice de rotation de correction associée au $K^{ième}$ pas.

Toutefois, le repère NF' dérive continuellement dans le temps et même pendant la phase de vol du pied.

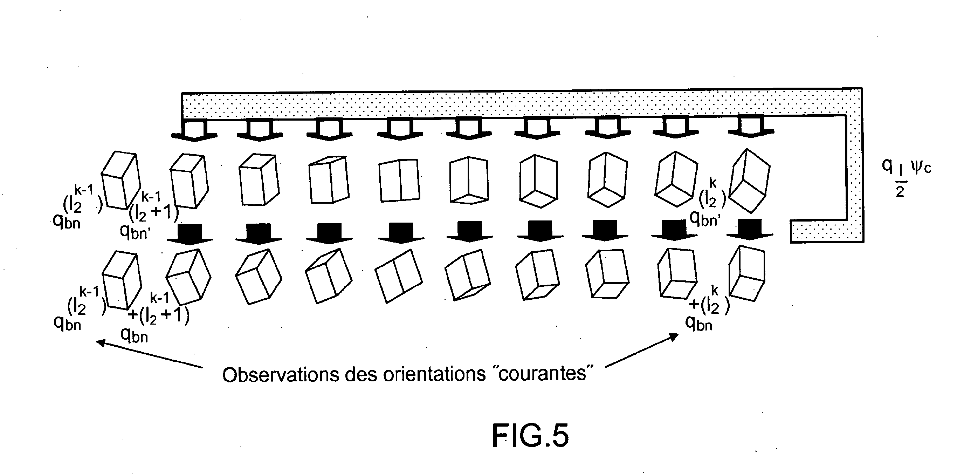

On suppose que l'erreur d'orientation ou de position angulaire est due à l'intégration des biais des mesures du gyromètre G au cours du temps. Ainsi, l'intégration d'un biais constant fait dériver linéairement l'orientation. Par conséquent, il est commode non seulement de corriger l'orientation finale, mais de réinjecter et de distribuer cette correction tout au long de la trajectoire comme illustré sur la figure 5.

Si le repère NF' dérive à cause d'un biais constant du gyromètre G, alors l'angle de la rotation donnée par $q_{n'n}$ croît linéairement dans le temps. Si le biais du gyromètre G varie lentement dans le temps, alors les dérives de l'angle de rotation $q_{n'n}$ peuvent encore être considérées linéaires pour une courte durée (par exemple pendant la phase de vol du pied).

Comme le montre la figure 1, il peut être ajouté deux étapes supplémentaires par rapport à l'état de l'art :

- une première étape calcule l'orientation du quaternion de correction $q_{\psi c}$ ;

- une deuxième étape détermine les quaternions corrigés $q_{bn}^+(t)$ grâce à une correction, qui augmente de manière linéaire, de l'ensemble des quaternions d'orientation $q_{bn}(t)$ qui détermine l'orientation du repère NF' dans le repère local BF, en commençant par le dernier indice temporel du pas précédemment corrigé $t \in [t_2^{\kappa-1}, t_2^\kappa]$. Ensuite, $q_{bn}^+(t)$ est calculé et la trajectoire de la cheville est recalculée. Enfin, une boucle est proposée permettant d'améliorer le calcul de $q_{bn}^+(t)$ et de sorte que la trajectoire de la cheville vérifie les contraintes ci-dessus.

Pour être plus précis, on donne les équations qui sont utilisées pour estimer la trajectoire corrigée. Soit $q^{+(0)} = q_{bn}^{(0)}$ le quaternion de la dernière orientation "vraie" connue, à la fin du pas précédent. Puis $L$ échantillons de vitesse angulaire sont intégrés avant d'observer la position à la fin du pas présent, dont le quaternion associé est noté $q_{bn}^{+(L)}$.

Sans commande de correction, l'orientation $q_{bn}^{(l)}$ calculée à partir de l'intégration des mesures du gyromètre dérive dans le temps.

Un but de l'invention est de calculer l'orientation corrigée $q_{bn}^{+(l)}$ par application d'une correction $q_{\frac{l}{L}\psi_c}$ variant linéairement au cours du temps à l'orientation calculée (en l'espèce la correction croît linéairement au cours du temps), de manière à compenser la dérive de $q_{bn}^{(l)}$ en appliquant la relation suivante :

$$q_{bn}^{+(l)} = q_{bn'}^{(l)} \otimes q_{\frac{l}{L}\psi_c} \qquad \text{for } l \in \{l_2^{\kappa-1} : l_2^{\kappa}\} \qquad (25)$$

dans laquelle :

$$\begin{aligned} q_{bn'}^{(l)} &= q_{-\omega}^{b(l-1)} \otimes \ldots \otimes q_{-\omega}^{b(l_2^{\kappa-1}+1)} \otimes q^{+(l_2^{\kappa-1})} \\ q_{\frac{l}{L}\psi_c} &= [\cos(\frac{l}{L}\psi_c/2) \ -\sin(\frac{l}{L}\psi_c/2)\mathbf{q}_c]^T \end{aligned} \qquad (26)$$

Dans la relation (25), $q_{bn}^+$ est corrigé linéairement, de manière à avoir une correction continue de la l'orientation au début du pas $q_{bn}^+(0) = q_0$ à l'orientation à la fin du pas $q_{bn}^+(L) = q_{\psi_c} \otimes q_{bn'}^{(L)}$, ce qui est équivalent à $q_{bn}^+(L) = q_{bn'}^{(L)} \otimes q_{-\psi_c}$.

La trajectoire est recalculée à partir de l'orientation corrigée $q_{bn}^+$. Pour ce faire, le système suivant est d'abord calculé :

$$\begin{aligned} \breve{\mathbf{a}}^n(t) &= \mathbf{R}_{nb}^+(t)\mathbf{a}^b(t) \\ \breve{\mathbf{a}}_p^n(t) &= \breve{\mathbf{a}}^n(t) + \breve{\mathbf{g}}^n \end{aligned} \qquad (27)$$

dans lequel la grandeur $\breve{a}$ (respectivement $\breve{g}$) représente la quantité $a$ (respectivement $g$) calculée à partir de l'hypothèse de croissance linéaire de la dérive et donc de la correction linéaire.

La matrice $\mathbf{R}_{nb}^{+(l)}$ est obtenue à partir de $q_{nb}^{+(l)}$ comme dans la relation (4), et on a la relation suivante :

$$\breve{\mathbf{g}}^n = -\frac{1}{t_2^{\kappa} - t_1^{\kappa}} \int_{t=t_1^{\kappa}}^{t} \breve{\mathbf{a}}^n(t) \qquad (28)$$

Aussi, la vitesse et la position de l'ensemble capteur EC sont calculées par le système suivant :

$$\begin{aligned} \breve{\mathbf{v}}_I^n(t) &= \breve{\mathbf{v}}_I^n(t_1^{\kappa}) + \int_{t_1^{\kappa}}^{t} \breve{\mathbf{a}}_p^n(t)dt \\ \breve{\mathbf{p}}_I^n(t) &= \breve{\mathbf{p}}_I^n(t_2^{\kappa-1}) + \int_{t_1^{\kappa}}^{t} \breve{\mathbf{v}}_I^n(t)dt \end{aligned} \qquad (29)$$

Une fois la trajectoire de la cheville calculée, il est possible de recalculer dans une autre boucle un nouveau quaternion de correction $q_{\psi_c}$ à partir de cette dernière trajectoire de la cheville. Ensuite, on effectue à nouveau une boucle pour calculer un nouveau quaternion $q_{bn}^+$ et un nouvelle position $\breve{\mathbf{p}}_I^n$.

On peut remarquer que dans la relation (25), $q_{bn}^{+(l)}$ peut être écrit de manière récursive en fonction de $q_{bn}^{+(l-1)}$ selon la relation suivante :

$$q_{bn}^{+(l)} \quad = \quad q_{-\omega^+}^{b(l-1)} \otimes q_{bn}^{+(l-1)} \tag{30}$$

dans laquelle $q_{-\omega^+}^{b(l)}$ désigne le quaternion de vitesse angulaire corrigé et est défini par la relation suivante :

$$q_{-\omega^+}^{b(l)} = q_{-\omega}^{b(l)} \otimes q_{-\frac{1}{L}\psi_c}^{+(l)} = q_{-\omega}^{b(l)} \otimes \left( q_{bn'}^{(l)} \otimes q_{-\frac{1}{L}\psi_c} \otimes q_{n'b}^{(l)} \right) \tag{31}$$

auquel cas la correction est équirépartie, la relation (31) étant obtenue par la relation suivante :

$$
\begin{aligned}
q_{bn}^{+(l)} \quad &= \quad q_{bn'}^{(l)} \otimes q_{-\frac{l}{L}\psi_c} \\
&= \quad \left[ q_{-\omega}^{b(l-1)} \otimes q_{bn'}^{(l-1)} \right] \otimes \left[ q_{-\frac{1}{L}\psi_c} \otimes q_{-\frac{l-1}{L}\psi_c} \right] \\
&= \quad \left[ q_{-\omega}^{b(l-1)} \otimes q_{bn'}^{(l-1)} \right] \otimes \left[ q_{-\frac{1}{L}\psi_c} \otimes \left( q_{n'b}^{(l-1)} \otimes q_{bn'}^{(l-1)} \right) \otimes q_{-\frac{l-1}{L}\psi_c} \right] \\
&= \quad q_{-\omega}^{b(l-1)} \otimes \left( q_{bn'}^{(l-1)} \otimes q_{-\frac{1}{L}\psi_c} \otimes q_{n'b}^{(l-1)} \right) \otimes q_{bn}^{+(l-1)} \\
&= \quad q_{-\omega^+}^{b(l-1)} \otimes q_{bn}^{+(l-1)}
\end{aligned}
\tag{32}
$$

L'invention proposée est testée et comparée à une approche classique différente à partir de données expérimentales identiques. Un piéton muni d'un ensemble capteur 3A3G, pour accéléromètre triaxial et gyromètre triaxial, fixés solidairement sur sa cheville, marche à l'intérieur d'un bâtiment où le sol est supposé plan et horizontal, le plan de la marche étant supposé vertical.

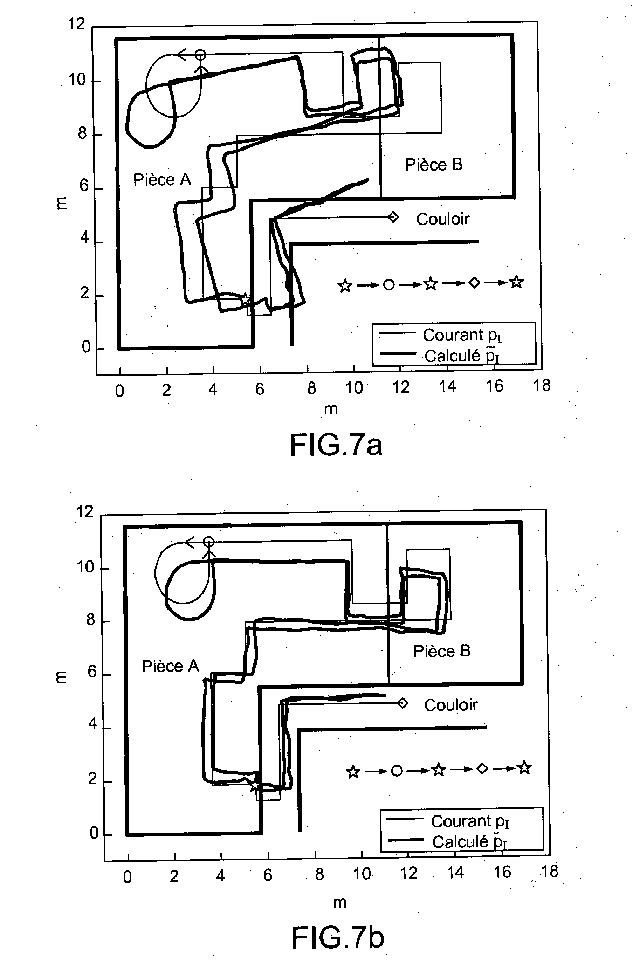

Les figures 7a, 7b, et 7c représentent la trajectoire en trois dimensions ou 3D de la cheville du piéton. Sur la figure 7a, aucune correction n'est effectuée, sur la figure 7b, la correction est faite avec la première hypothèse d'angle constant entre NF et NF' (par l'équation (24) et les précédentes) et sur la figure 7c, la correction est faite avec la deuxième hypothèse de variation linéaire de l'angle entre NF et NF'. Contrairement à la trajectoire calculée sans correction, qui dérive comme le montre la figure 7a, il est clair que les corrections proposées garantissent les contraintes, comme illustré sur les figures 7b et 7c.

Comme explicité précédemment, le quaternion de correction $q_{\psi_c}$ n'est pas en mesure de corriger la dérive de la position. On note $\tilde{v}$ la vitesse horizontale, et $\tilde{\varphi}_b$ la direction du déplacement par rapport au Nord biaisée donnée en utilisant la première hypothèse (i.e. dérive d'orientation invariante dans le temps). On note $\breve{v}$ la vitesse horizontale et $\breve{\varphi}_b$ la direction du déplacement par rapport au Nord données en utilisant la seconde hypothèse (i.e. dérive d'orientation linéaire dans le temps).

On a les relations suivantes :

$$
\begin{aligned}
\tilde{v} \quad &= \quad \sqrt{(\tilde{v}_{I,x}^{n})^2 + (\tilde{v}_{I,y}^{n})^2} \\
\tilde{\varphi}_b \quad &= \quad \operatorname{atan}\left( \frac{\tilde{v}_{I,y}^{n}}{\tilde{v}_{I,y}^{n}} \right)
\end{aligned}
\tag{33}
$$

et

$$\breve{v} \quad = \quad \sqrt{(\breve{v}_{I,x}^{n})^2 + (\breve{v}_{I,y}^{n})^2}$$

$$\breve{\varphi}_b \quad = \quad \mathrm{atan}\left(\frac{\breve{v}_{I,y}^{n}}{\breve{v}_{I,y}^{n}}\right) \tag{34}$$

$\tilde{\mathbf{v}}_I^{n} = [\tilde{v}_{I,x}^{n} \quad \tilde{v}_{I,y}^{n} \quad \tilde{v}_{I,z}^{n}]^T$ et $\breve{\mathbf{v}}_I^{n} = [\breve{v}_{I,x}^{n} \quad \breve{v}_{I,y}^{n} \quad \breve{v}_{I,z}^{n}]^T$ sont donnés respectivement dans les relations (24) et (29).

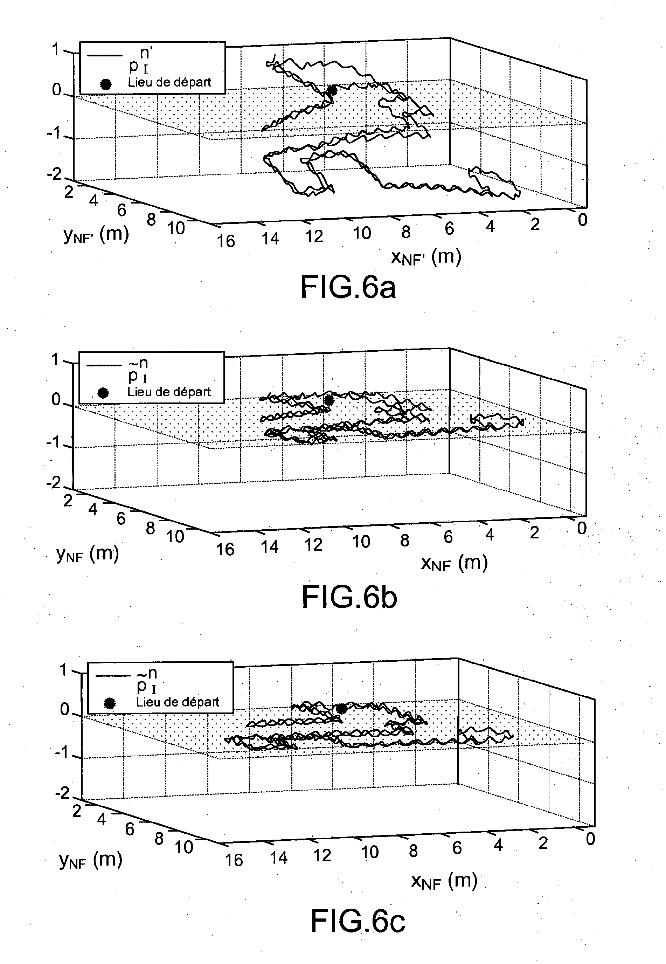

Les figures 8a et 8b montrent respectivement les mêmes trajectoires que celles des figures 6b et 6c dans le plan horizontal. En l'espèce, les directions du déplacement par rapport au Nord $\tilde{\varphi}_b$ et $\tilde{\varphi}_b$ sont biaisées, mais on peut

remarquer sur $\breve{\varphi}_b$ que la correction d'orientation avec la deuxième hypothèse réduit clairement cette dérive $\breve{\varphi}_b$.

## Revendications

**1.** Procédé d'estimation d'une trajectoire d'un élément ou corps mobile à l'aide d'un ensemble capteur, cet ensemble capteur étant fixé à l'élément ou corps mobile et comportant un accéléromètre et un gyromètre liés de manière solidaire, comportant les étapes suivantes :

- réception de valeurs d'accélération fournies par l'accéléromètre et mesurées à au moins deux instants parmi une pluralité d'instants successifs d'un intervalle de temps,
- réception de valeurs de vitesse angulaire fournies par le gyromètre et mesurées à au moins deux instants parmi ladite pluralité d'instants successifs de cet intervalle de temps,
- traitement des valeurs fournies pour l'estimation, d'une part, d'au moins une valeur de position angulaire à l'aide des valeurs de vitesse angulaire et, d'autre part, d'au moins deux valeurs de position cartésienne définissant une trajectoire de l'élément ou corps mobile à l'aide des valeurs d'accélération et de ladite au moins une valeur de position angulaire précédemment estimée,

**caractérisé en ce qu'**il comporte en outre les étapes suivantes :

- estimation de paramètres de rotation, par inversion d'un modèle de recalage rotatoire de la trajectoire estimée sous la contrainte d'une connaissance a priori de la trajectoire, cette connaissance a priori étant constituée de paramètres prédéterminés de cette trajectoire, et
- correction rétroactive de ladite au moins une valeur de position angulaire estimée, par application d'une rotation sur cette valeur à l'aide des paramètres de rotation estimés, de manière à fournir au moins une valeur de position angulaire corrigée.

**2.** Procédé d'estimation d'une trajectoire selon la revendication 1, dans lequel l'étape de correction rétroactive comporte en outre une correction rétroactive des valeurs de position cartésienne à l'aide des valeurs d'accélération et de ladite au moins une valeur de position angulaire corrigée.

**3.** Procédé d'estimation d'une trajectoire selon la revendication 1 ou 2, dans lequel :

- les valeurs d'accélération fournies par l'accéléromètre et les valeurs de vitesse angulaire fournies par le gyromètre sont exprimées dans un repère mobile lié à l'ensemble capteur, et
- lors de l'étape de traitement des valeurs fournies, l'estimation de ladite au moins une valeur de position angulaire est exprimée sous la forme de paramètres d'angles de rotation par rapport aux axes d'un repère global fixe lié au repère terrestre et l'estimation desdites valeurs de position cartésienne est exprimée sous la forme de coordonnées cartésiennes dans ce même repère global fixe.

**4.** Procédé d'estimation d'une trajectoire selon l'une quelconque des revendications 1 à 3, dans lequel l'étape de correction rétroactive est réalisée en une pluralité d'itérations, pour une correction itérative de ladite au moins une valeur de position angulaire estimée.

**5.** Procédé d'estimation d'une trajectoire selon l'une quelconque des revendications 1 à 4, dans lequel les paramètres de rotation sont ceux d'un quaternion.

**6.** Procédé d'estimation d'une trajectoire selon l'une quelconque des revendications 1 à 5, dans lequel la connaissance a priori de la trajectoire comporte des paramètres d'orientation angulaire, notamment par rapport à la verticale ou au nord, d'un plan considéré comme devant contenir la trajectoire.

**7.** Procédé d'estimation d'une trajectoire selon l'une quelconque des revendications 1 à 6, dans lequel la connaissance a priori de la trajectoire comporte les coordonnées cartésiennes d'au moins deux points considérés comme devant faire partie de la trajectoire.

**8.** Procédé d'estimation d'une trajectoire selon l'une quelconque des revendications 1 à 7, dans lequel la connaissance a priori de la trajectoire comporte des paramètres de cap ou de pente de la trajectoire.

**9.** Procédé d'estimation d'une trajectoire selon l'une quelconque des revendications 1 à 8, dans lequel l'étape de correction rétroactive est conçue pour que la correction réalisée à l'aide des paramètres de rotation estimés soit répartie de manière prédéterminée sur tout ou partie de ladite pluralité d'instants successifs.

**10.** Procédé d'estimation d'une trajectoire selon la revendication 9, dans lequel la répartition prédéterminée de la correction rétroactive est définie de manière à faire croître linéairement des paramètres de correction calculés à l'aide des paramètres de rotation estimés sur tout ou partie de ladite pluralité d'instants successifs.

**11.** Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé d'estimation d'une trajectoire selon l'une quelconque des revendications 1 à 10, lorsque ledit programme est exécuté sur un ordinateur.

**12.** Système d'estimation d'une trajectoire d'un élément ou corps mobile, comportant:

- un accéléromètre apte à fournir des valeurs d'accélération mesurées à des instants successifs d'un intervalle de temps donné,
- un gyromètre lié de manière solidaire à l'accéléromètre, apte à fournir des valeurs de vitesse angulaire mesurées à des instants successifs de cet intervalle de temps, et
- des moyens de traitement des valeurs fournies par l'accéléromètre et le gyromètre conçus pour la mise en oeuvre d'un procédé d'estimation d'une trajectoire selon l'une quelconque des revendications 1 à 10.

**13.** Système d'estimation d'une trajectoire selon la revendication 12, comportant des moyens de fixation solidaire de l'accéléromètre et du gyromètre à un utilisateur, par exemple à la cheville de cet utilisateur, à un terminal mobile ou à un véhicule terrestre, aérien ou maritime.

**Patentansprüche**

**1.** Verfahren zur Schätzung eines Wegs eines mobilen Elements oder Körpers mit Hilfe einer Sensoreinheit, wobei diese Sensoreinheit an dem mobilen Element oder Körper befestigt ist und einen Beschleunigungsmesser und ein Gyroskop, die fest verbunden sind, umfasst, das die folgenden Schritte umfasst:

- Empfang von Beschleunigungswerten, die von dem Beschleunigungsmesser geliefert werden, die in mindestens zwei Augenblicken aus einer Mehrzahl aufeinanderfolgender Augenblicke eines Zeitintervalls gemessen werden,
- Empfang von Winkelgeschwindigkeitswerten, die von dem Gyroskop geliefert werden, die in mindestens zwei Augenblicken aus der Mehrzahl aufeinanderfolgender Augenblicke dieses Zeitintervalls gemessen werden,
- Verarbeitung der gemessenen Werte zur Schätzung, einerseits, von mindestens einem Winkelpositionswert mit Hilfe der Winkelgeschwindigkeitswerte und, andererseits, von mindestens zwei kartesischen Positionswerten, die einen Weg des mobilen Elements oder Körpers mit Hilfe der Beschleunigungswerte und dem mindestens einen Winkelpositionswert, der zuvor geschätzt wurde, definieren,

**dadurch gekennzeichnet, dass** es außerdem die folgenden Schritte umfasst:

- Schätzung von Rotationsparametern durch Umkehren eines Rotations-Neueinstellmodells des geschätzten Wegs, unter der Auflage einer Apriorikenntnis des Wegs, wobei diese Apriorikenntnis aus vorbestimmten Parametern dieses Wegs gebildet ist, und
- retroaktive Korrektur des mindestens einen geschätzten Winkelpositionswerts durch Anwenden einer Drehung auf diesen Wert mit Hilfe der geschätzten Rotationsparameter derart, dass mindestens ein korrigierter Winkelpositionswert geliefert wird.

2. Schätzungsverfahren eines Wegs nach Anspruch 1, wobei der retroaktive Korrekturschritt außerdem eine retroaktive Korrektur der kartesischen Positionswerte mit Hilfe der Beschleunigungswerte und des mindestens einen korrigierten Winkelpositionswerts umfasst.

3. Schätzungsverfahren eines Wegs nach Anspruch 1 oder 2, wobei:

- die von dem Beschleunigungsmesser gelieferten Beschleunigungswerte und die von dem Gyroskop gelieferten Winkelgeschwindigkeitswerte in einem mobilen Bezugssystem, das mit der Sensoreinheit verbunden ist, ausgedrückt sind, und
- bei dem Verarbeitungsschritt der gelieferten Werte, die Schätzung des mindestens einen Winkelpositionswerts in der Form von Rotationswinkelparametern in Bezug auf Achsen eines globalen stationären Bezugssystems, das mit dem terrestrischen Bezugssystem verbunden ist, ausgedrückt wird, und die Schätzung der kartesischen Positionswerte in der Form kartesischer Koordinaten in demselben globalen stationären Bezugssystem ausgedrückt wird.

4. Schätzungsverfahren eines Wegs nach einem der Ansprüche 1 bis 3, wobei der retroaktive Korrekturschritt in mehreren Iterationen für eine iterative Korrektur des mindestens einen geschätzten Winkelpositionswerts ausgeführt wird.

5. Schätzungsverfahren eines Wegs nach einem der Ansprüche 1 bis 4, wobei die Rotationsparameter diejenigen eines Quaternion sind.

6. Schätzungsverfahren eines Wegs nach einem der Ansprüche 1 bis 5, wobei die Apriorikenntnis des Wegs Winkelausrichtungsparameter insbesondere bezüglich der Senkrechten oder des Nordens eines Plans umfasst, der als den Weg enthalten müssend betrachtet wird.

7. Schätzungsverfahren eines Wegs nach einem der Ansprüche 1 bis 6, wobei die Apriorikenntnis des Wegs die kartesischen Koordinaten von mindestens zwei Punkten, die als zu dem Weg gehören müssend betrachtet werden.

8. Schätzungsverfahren eines Wegs nach einem der Ansprüche 1 bis 7, wobei die Apriorikenntnis des Wegs Kurs- oder Neigungsparameter des Wegs umfasst.

9. Schätzungsverfahren eines Wegs nach einem der Ansprüche 1 bis 8, wobei der retroaktive Korrekturschritt so konzipiert ist, dass die mit Hilfe der geschätzten Rotationsparameter ausgeführte Korrektur vorbestimmt auf einem Teil oder allen der gesamten Vielzahl aufeinanderfolgender Augenblicke verteilt wird.

10. Schätzungsverfahren eines Wegs nach Anspruch 9, wobei die vorbestimmte Verteilung der retroaktiven Korrektur derart definiert ist, dass die mit Hilfe der geschätzten Rotationsparameter berechneten Korrekturparameter auf einem Teil oder allen der gesamten Vielzahl aufeinanderfolgender Augenblicke linear steigen.

11. Computerprogramm, das von einem Kommunikationsnetzwerk ausgehend heruntergeladen und/oder auf einem von einem Computer lesbaren Träger aufgezeichnet werden kann und/oder von einem Prozessor ausführbar ist, **dadurch gekennzeichnet, dass** es Anweisungen für die Ausführung der Schritte eines Schätzungsverfahrens eines Wegs nach einem der Ansprüche 1 bis 10 umfasst, wenn das Programm auf einem Computer ausgeführt wird.

12. Schätzungssystem eines Wegs eines mobilen Elements oder Körpers, das umfasst:

- einen Beschleunigungsmesser, der geeignet ist, Beschleunigungswerte zu liefern, die in aufeinanderfolgenden Augenblicken eines gegebenen Zeitintervalls gemessen werden,
- ein Gyroskop, das fest mit dem Beschleunigungsmesser verbunden ist, das geeignet ist, Winkelgeschwindigkeitswerte zu liefern, die in aufeinanderfolgenden Augenblicken dieses Zeitintervalls gemessen werden, und

- Verarbeitungsmittel der von dem Beschleunigungsmesser und dem Gyroskop gelieferten Werte, die zur Umsetzung eines Schätzungsverfahrens eines Wegs nach einem der Ansprüche 1 bis 10 konzipiert sind.

13. Schätzungssystem eines Wegs nach Anspruch 12, das Mittel zum festen Befestigen des Beschleunigungsmessers und/oder des Gyroskops an einem Benutzer, zum Beispiel an dem Knöchel dieses Benutzers, an einem mobilen Endgerät oder an einem Land-, Luft- oder Seefahrzeug umfasst.

**Claims**

1. Method for estimating a path of a moving element or body using a sensor assembly, wherein said sensor assembly is mounted on the moving element or body and comprises an accelerometer and a gyrometer which are rigidly connected, comprising the following steps:

   - receiving acceleration values provided by the accelerometer and measured for at least two times from a plurality of successive times of a time interval,
   - receiving angular velocity values provided by the gyrometer and measured for at least two times from said plurality of successive times of said time interval,
   - processing the values provided for estimating, on the one hand, at least one angular position value using the angular velocity values and, on the other hand, at least two Cartesian position values defining a path of the moving element or body using the acceleration values and said at least one previously estimated angular position value,

   **characterized in that** it further comprises the following steps:

   - estimating rotation parameters, by inverting a rotational realignment model of the estimated path subject to prior knowledge of the path, wherein this prior knowledge consists of predetermined parameters of the path, and
   - retroactively correcting said at least one estimated angular position value, by applying a rotation on this value using the estimated rotation parameters, so as to provide at least one corrected angular position value.

2. Method for estimating a path according to claim 1, wherein the retroactive correction step further comprises a retroactive correction of the Cartesian position values using the acceleration values and said at least one corrected angular position value.

3. Method for estimating a path according to claim 1 or 2, wherein:

   - the acceleration values provided by the accelerometer and the angular velocity values provided by the gyrometer are expressed in a moving frame linked with the sensor assembly, and
   - during the step for processing the values provided, the estimation of said at least one angular position value is expressed in the form of rotational angle parameters in relation to the axes of a fixed global frame linked with the Earth's frame and the estimation of said Cartesian position values is expressed in the form of Cartesian coordinates in the same fixed global frame.

4. Method for estimating a path according to any of claims 1 to 3, wherein the retroactive correction step is performed in a plurality of iterations, for an iterative correction of said at least one estimated angular position value.

5. Method for estimating a path according to any of claims 1 to 4, wherein the rotation parameters are those of a quaternion.

6. Method for estimating a path according to any of claims 1 to 5, wherein the prior knowledge of the path includes angular orientation parameters, particularly in relation to the vertical and the North, of a plane considered to contain the path.

7. Method for estimating a path according to any of claims 1 to 6, wherein the prior knowledge of the path includes the Cartesian coordinates of at least two points considered to be part of the path.

8. Method for estimating a path according to any of claims 1 to 7, wherein the prior knowledge of the path includes heading or slope parameters of the path.

9. Method for estimating a path according to any of claims 1 to 8, wherein the retroactive correction step is devised so that the correction made using the estimated rotation parameters is distributed in a predetermined manner over all or part of said plurality of successive times.

10. Method for estimating a path according to claim 9, wherein the predetermined distribution of the retroactive correction is defined so as to increase, in a linear fashion, correction parameters calculated using the estimated rotation parameters over all of part of said plurality of successive times.

11. Computer program downloadable from a communication network and/or saved on a computer-readable medium and executable by a processor, comprising instructions for executing the steps of a method for estimating a path according to any of claims 1 to 10, when said program is executed on a computer.

12. System for estimating a path of a moving element or body, comprising:

- an accelerometer suitable for providing acceleration values measured at successive times of a given time interval,
- a gyrometer rigidly connected to the accelerometer, suitable for providing angular velocity values measured at successive times of said time interval, and
- means for processing the values provided by the accelerometer and the gyrometer devised for implementing a method for estimating a path according to any of claims 1 to 10.

13. System for estimating a path according to claim 12, comprising means for rigidly mounting the accelerometer and the gyrometer on a user, for example on the user's ankle, on a mobile terminal or on a land, air or sea vehicle.

FIG.1

z
(Altitude)

Trajectoire obtenue
par intégration sur [$t_1$, $t_2$]
des accélérations propres

Trajectoire
initialement
calculée

θ

x

$t_1$

$t_2$

Hypothèse:
$z(t_1) = z(t_2)$

(sens de déplacement)

Correction à apporter
pour satisfaire l'hypothèse

# FIG.2a

z
(Altitude)

Trajectoire recalculée à partir
des hypothèses sur la
trajectoire grace à la
correction des orientations
obtenue à partir de θ

Trajectoire
recalculée a
posteriori

x

$t_1$

$t_2$

Hypothèse:
$z(t_1) = z(t_2)$

(sens de déplacement)

# FIG.2b

FIG.3

FIG.4

Observations des orientations "courantes"

**FIG.5**

FIG.6a

FIG.6b

FIG.6c

FIG.7a

FIG.7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2918745
- US 20070018890 A
- EP 1488197 A
- US 6323807 B

**Littérature non-brevet citée dans la description**

- **DE JASPER JAHN ; JOCHEN SEITZ ; LUCILA PATINO-STUDENCKA ; ULRICH BATZER ; JAVIER GUTIÉRREZ BORONAT.** Comparison and Evaluation of Accélération Based Step Length Estimators for Handheld Devices. *IPIN conference, Zurich,* 2010
- **NADIR CASTANEDA ; SYLVIE LAMY-PERBAL.** An improved shoe-mounted inertial navigation system. *IPIN conference, Zurich,* 2010
- Pedestrian Inertial Navigation with Gait Phase Detection Assisted Zero Velocity Updating Young Soo Suh, Sangkyung Park. *4th International Conference on Autonomous Robots and Agents,* 10 Février 2009
- **ULRICH WALDER ; THOMAS BERNOULLI ; GERALD GLANZER ; THOMAS WIEßFLECKER.** Context-Adaptive Algorithms to Improve Indoor Positioning with Inertial Sensors. *IPIN conference,* 2010
- **C. ASCHER ; C. KESSLER ; M. WANKERL ; G.F. TROMMER.** Dual IMU Indoor Navigation with Particle Filter based Map-Matching on a Smartphone. *IPIN conference,* 2010
- **DE JOHN-OLOF NILSSON ; ISAAC SKOG ; PETER HÄNDEL.** Design choices, filter parameter tuning, and calibration of zero-velocity update aided inertial navigation systems for pedestrian navigation. *IPIN conference, Zurich,* 2010
- **ANTONIO R. JIMÉNEZ ; FERNANDO SECO ; J. CARLOS PRIETO ; JORGE GUEVARA.** Pedestrian Indoor Navigation by aiding a Foot-mounted IMU with RFID Signal Strength Measurements. *IPIN conference, Zurich,* 2010
- **PETER STRÖMBÄCK ; JOUNI RANTAKOKKO ; ERIKA EMILSSON.** On the use of foot-mounted INS, - UWB-ranging and opportunistic coopération in high-accuracy indoor positioning systems. *IPIN conference, Zurich,* 2010
- **D'ALBERTO CROCI ; MATTIA DE AGOSTINO ; AMBROGIO MANZINO.** A GPS/INS-based architecture for rescue team monitoring. *IPIN conference, Zurich,* 2010
- **AUFDERHEIDE ; WERNER KRYBUS.** Towards Real-Time Camera Egomotion Estimation and Three-Dimensional Scene Acquisition from Monocular Image Streams. *IPIN conference, Zurich,* 2010
- **JÖRG BLANKENBACH ; ABDELMOUMEN NORRDINE.** Position Estimation Using Artificial Generated Magnetic Fields. *IPIN conference, Zurich,* 2010
- **HEIKE RUSSMANN ; FRANÇOIS J.G. VINGERHOETS ; CATHERINE DEHOLLAIN ; YVES BLANC ; PIERRE R. BURKHARD ; KAMIAR AMINIAN.** Gait Assessment in Parkinson's Disease: Toward an Ambulatory System for Long-Term Monitoring Arash Salarian. *IEEE Transactions, Biomedical Engineering,* 2004, vol. 51 (8), 1434-1443
- **BRIGITTE M. JOLIES ; EMILIO CASANOVA ; PASCAL FUA ; KAMIAR AMINIAN.** Estimation and Visualization of Sagittal Kinematics of Lower Limbs Orientation Using Body-Fixed Sensors Hooman Dejnabadi. *IEEE Transactions On Biomedical Engineering,* Juillet 2006, vol. 53 (7), 1385-1393
- **KAIYU TONG ; MALCOLM H. GRANAT.** A practical gait analysis system using gyroscopes. *Medical Engineering & Physics,* 1999, vol. 21, 87-94
- **P.H. VELTINK ; P. SLYCKE ; J. HEMSSEMS ; R. BUSCHMAN ; G. BULTSTRA ; H. HERMENS.** Three dimensional inertial sensing of foot movements for automatic tuning of a two-channel implantable drop-foot stimulator. *Medical Engineering & Physics,* 2003, vol. 25, 21-28
- **YUN XIAOPING ; E.R. BACHMANN ; H. MOORE ; J. CALUSDIAN.** Self-contained Position Tracking of Human Movement Using Small Inertial/Magnetic Sensor Modules. *IEEE International Conference on Robotics and Automation,* 2007
- **K. AMINIAN ; B. NAJAFIA ; C. BÜLAB ; P. -F. LEYVRAZC ; PH. ROBERT.** Spatio-temporal parameters of gait measured by an ambulatory system using miniature gyroscopes. *Journal of Biomechanics,* 2002, vol. 35 (5), 689-699